(19) Europäisches Patentamt
European Patent Office
Office européen des brevets

(11) **EP 4 524 885 A2**

(12) **EUROPEAN PATENT APPLICATION**

(43) Date of publication:
**19.03.2025 Bulletin 2025/12**

(21) Application number: **24190552.0**

(22) Date of filing: **24.07.2024**

(51) International Patent Classification (IPC):
**G06T 7/00** (2017.01)   **G05B 19/418** (2006.01)
**G05D 1/225** (2024.01)   **G06Q 50/04** (2012.01)
**G06T 7/77** (2017.01)

(52) Cooperative Patent Classification (CPC):
**G06T 7/0004; G05B 19/41895; G05D 1/225;**
**G06Q 50/04; G06T 7/77;** G05D 2107/70;
G05D 2111/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.09.2023 JP 2023149773**

(71) Applicant: **TOYOTA JIDOSHA KABUSHIKI**
**KAISHA**
**Aichi-ken, 471-8571 (JP)**

(72) Inventors:
• **YOKOYAMA, Daiki**
  **Toyota-shi, 471-8571 (JP)**
• **SAITO, Yasuhiro**
  **Kariya-shi, 448-0002 (JP)**

(74) Representative: **J A Kemp LLP**
**80 Turnmill Street**
**London EC1M 5QU (GB)**

(54) **CALCULATION DEVICE, CALCULATION SYSTEM, INFORMATION PROCESSING DEVICE, AND CALCULATION METHOD**

(57)     A calculation device includes a sensor information acquisition unit (621) configured to acquire first sensor information acquired by a first sensor that detects a moving object (10) classified into a first state (St1) from an outside of the moving object (10), and acquire second sensor information acquired by a second sensor that detects the moving object (10) classified into a second state (St2) from the outside, and a calculation unit (6) configured to calculate at least one of a position and an orientation of the moving object (10) by using the first sensor information without executing preprocessing, and execute the preprocessing to calculate at least one of the position and the orientation of the moving object (10) by using the second sensor information.

FIG. 3

EP 4 524 885 A2

**Description**

BACKGROUND OF THE INVENTION

1. Field of the Invention

The present disclosure relates to a calculation device, a calculation system, an information processing device, and a calculation method.

2. Description of Related Art

In the related art, a vehicle that executes unmanned traveling by a remote control is known (Japanese Unexamined Patent Application Publication (Translation of PCT Application) No. 2017-538619 (JP 2017-538619 A)).

SUMMARY OF THE INVENTION

At least one of a position and an orientation of a moving object may be calculated by using sensor information output from a sensor by detecting the moving object from the outside via the sensor. In order to calculate the position or the like of the moving object by using the sensor information, an appearance shape of the moving object may be detected from the sensor information. For example, in a case where the appearance shape of the moving object included in a captured image output from a camera is detected, a method of training a machine learning model as preprocessing and detecting the appearance shape of the moving object by using the trained machine learning model is conceivable. However, in a case where the moving object moves in a factory in which the moving object is manufactured, the appearance of the moving object may be different depending on a manufacturing step. For example, in a case where the moving object is a vehicle, an appearance of a vehicle in a form of a platform on which various devices, such as wheels and a vehicle control device, are assembled into a chassis and an appearance of a vehicle in a form of a vehicle body on which a vehicle body, such as a bodyshell, is assembled into a chassis are significantly different. Due to the difference in the appearance of the moving object depending on the manufacturing step, there is a possibility that the detection accuracy when the appearance shape of the moving object is detected from the sensor information is decreased. When the detection accuracy when the appearance shape of the moving object is detected from the sensor information is decreased, there is a possibility that the calculation accuracy of the position or the like of the moving object is decreased. Therefore, in a case where the appearance shape of the moving object is detected by using the trained machine learning model, the machine learning model is desirably trained for each appearance state of the moving object. Therefore, in a case where the trained machine learning model is used to detect the appearance shape of the moving object included in the sensor information when the moving object moves in the factory, data for learning may need to be prepared for each appearance state of the moving object, or a learning time may be longer by the number of the appearance states of the moving object. On the other hand, for example, in a case where the appearance shape of the moving object included in measurement point group data output from a light detection and ranging (LiDAR) is detected, a method of executing matching between the measurement point group data and point group data for reference prepared in advance to calculate the position or the like of the moving object is conceivable. In this case, the position or the like of the moving object can be calculated without executing the preprocessing, such as training the machine learning model, and thus a load needed for the preprocessing executed to calculate the position or the like of the moving object can be reduced. However, in general, the LiDAR is more expensive than the camera. In this way, in a case where the position or the like of the moving object is calculated without executing the preprocessing, depending on a kind of the sensor, the cost needed for calculating the position or the like of the moving object may be higher than the cost needed for executing the preprocessing to calculate the position or the like of the moving object. From the above, there is a demand for a technique capable of calculating the position or the like of the moving object at a low cost while reducing the load needed for the preprocessing executed to calculate the position or the like of the moving object.

The present disclosure can be implemented as the following forms.

A first aspect of the present disclosure provides a calculation device. In the calculation device, a moving object is configured to move by unmanned driving in a factory in which a plurality of manufacturing steps is executed to manufacture the moving object. The moving object is classified into a plurality of states by having different appearances depending on the manufacturing steps. The calculation device includes a sensor information acquisition unit and a calculation unit. The sensor information acquisition unit is configured to acquire first sensor information that is output from a first sensor by detecting the moving object classified into a first state among the states via the first sensor from an outside of the moving object and that represents the moving object classified into the first state, and acquire second sensor information that is output from a second sensor of a different kind from the first sensor by detecting the moving object classified into a second state different from the first state among the states via the second sensor from the outside and that represents the moving object classified into the second state. The calculation unit is configured to calculate at least one of a position and an orientation of the moving object by using the first sensor information without executing preprocessing, and execute the preprocessing to calculate at least one of the position and the orientation of the moving object by using the second sensor information. According to this aspect, the calculation device can calculate at least one of the position and the orientation of the moving object classified into the first state by using the first sensor information without executing the preprocessing. The calculation device can execute the preprocessing to calculate at least one of the position and the orientation of the moving object classified into the second state by using the second sensor information. In this way, the preprocessing need not be executed when at least one of the position and the orientation of the moving object classified into the first state is calculated. Therefore, the load needed for the preprocessing executed to calculate the position or the like of the moving object can be reduced. Further, according to this aspect, the moving object classified into the first state and the moving object classified into the second state can be detected by different kinds of sensors depending on the price of the sensor. As a result, the possibility that the cost needed for calculating the position or the like of the moving object is increased can be reduced.

In the second aspect of the present disclosure, the first sensor may be any one of a camera and a LiDAR, and the second sensor may be the other of the camera and the LiDAR.

A second aspect of the present disclosure provides a calculation system. In the calculation system, a moving object is configured to move by unmanned driving in a factory in which a plurality of manufacturing steps is executed to manufacture the moving object. The moving object is classified into a plurality of states by having different appearances depending on the manufacturing steps. The calculation system includes a first sensor, a second sensor, and a calculation unit. The first sensor is configured to output first sensor information representing the moving object classified into a first state among the states by detecting the moving object classified into the first state from an outside of the moving object. The second sensor is configured to output second sensor information representing the moving object classified into a second state different from the first state among the states by detecting the moving object classified into the second state from the outside. The second sensor is a different kind from the first sensor. The calculation unit is configured to calculate at least one of a position and an orientation of the moving object by using the first sensor information without executing preprocessing, and execute the preprocessing to calculate at least one of the position and the orientation of the moving object by using the second sensor information. According to this aspect, the calculation system can calculate at least one of the position and the orientation of the moving object classified into the first state by using the first sensor information without executing the preprocessing. The calculation system can execute the preprocessing to calculate at least one of the position and the orientation of the moving object classified into the second state by using the second sensor information. In this way, the preprocessing need not be executed when at least one of the position and the orientation of the moving object classified into the first state is calculated. Therefore, the load needed for the preprocessing executed to calculate the position or the like of the moving object can be reduced. Further, according to this aspect, the moving object classified into the first state and the moving object classified into the second state can be detected by different kinds of sensors depending on the price of the sensor. As a result, the possibility that the cost needed for calculating the position or the like of the moving object is increased can be reduced.

In the second aspect of the present disclosure, the calculation system may further include a determination information acquisition unit and a determination unit. The determination information acquisition unit may be configured to acquire at least one of state information indicating which of the states the state of the moving object is, and step information indicating which of the manufacturing steps the manufacturing step being executed on the moving object is. The determination unit may be configured to determine which of the first sensor and the second sensor is used to detect the moving object by using at least one of the state information and the step information, for calculating at least one of the position and the orientation of the moving object. The calculation unit may be configured to calculate at least one of the position and the orientation of the moving object by using the first sensor information or the second sensor information output from the first sensor or the second sensor determined by the determination unit to be used to detect the moving object. According to this aspect, the calculation system can calculate at least one of the position and the orientation of the moving object by using the sensor information acquired by detecting the moving object via the sensor of a kind corresponding to the state of the moving object.

In the second aspect of the present disclosure, the calculation system may further include a determination information acquisition unit and a determination unit. The determination information acquisition unit may be configured to acquire at least one of state information indicating which of the states the state of the moving object is, and step information indicating which of the manufacturing steps the manufacturing step being executed on the moving object is. The determination unit may be configured to determine which of the first sensor and the second sensor is used to detect the moving object by using at least one of the state information and the step information, for calculating at least one of the position and the orientation of the moving object. The calculation unit may be configured to calculate at least one of the position and the orientation of the moving object by using the first sensor information or the second sensor information output from the first sensor or the second sensor determined by the determination unit to be used to detect the moving object.

In the second aspect of the present disclosure, the first sensor may be one of a camera and a LiDAR, and the second sensor may be the other of the camera and the LiDAR.

In the second aspect of the present disclosure, the calculation unit may be configured to detect the moving object from a captured image output from the camera and output shape data indicating an appearance shape of the moving object. The calculation unit may be configured to calculate coordinates of a positioning point set in advance for the moving object in an image coordinate system by using the shape data. The calculation unit may be configured to calculate at least one of the position and the orientation of the moving object represented by the captured image by transforming the calculated coordinates into coordinates in a global coordinate system. According to this aspect, the calculation unit can calculate at least one of the position and the orientation of the moving object represented by the captured image by transforming the coordinates in the image coordinate system into the coordinates in the global coordinate system, by using the shape data.

In the second aspect of the present disclosure, the calculation unit may be configured to execute matching between measurement point group data output from the LiDAR and point group data for reference prepared in advance, to calculate at least one of the position and the orientation of the moving object represented by the measurement point group data. According to this aspect, the calculation unit can execute matching between the measurement point group data output from the LiDAR and the point group data for reference prepared in advance, to calculate at least one of the position and the orientation of the moving object represented by the measurement point group data.

In the second aspect of the present disclosure, the preprocessing may include learning processing of training a machine learning model. According to this aspect, a feature value of the moving object classified into the first state need not be learned in the learning processing. Therefore, the time and effort for preparing the data for learning for the moving object classified into the first state can be saved. Further, in the time needed for the machine learning, the time needed for learning the feature value of the moving object classified into the first state can be reduced. As a result, the learning time can be shortened. Therefore, the load needed for the preprocessing executed to calculate the position or the like of the moving object can be reduced in a state where the possibility that the detection accuracy when the appearance shape of the moving object is detected from the first sensor information is decreased is reduced.

In the second aspect of the present disclosure, the calculation unit may be configured to acquire shape data indicating an appearance shape of the moving object by inputting the second sensor information to the machine learning model that is trained by executing the learning processing and is trained to output the shape data when the second sensor information is input. The calculation unit may be configured to calculate at least one of the position and the orientation of the moving object by using the shape data. According to this aspect, the calculation unit can acquire the shape data by inputting the second sensor information to the trained machine learning model. The calculation unit can calculate at least one of the position and the orientation of the moving object by using the shape data.

In the second aspect of the present disclosure, the machine learning model may be prepared for each of the states of the moving object. A plurality of the machine learning models prepared respectively for the states may be trained in advance to output the shape data, by inputting a plurality of training images including M first training images each including the moving object classified into one state among the states and N second training images each including the moving object classified into remaining other states, M being an integer of 2 or more, and N being an integer of 0 or more and less than M. The calculation unit may be configured to acquire the shape data by inputting the second sensor information to the machine learning model selected depending on the state of the moving object from among the machine learning models prepared respectively for the states. The calculation unit may be configured to calculate coordinates of a positioning point set in advance for the moving object in an image coordinate system by using the shape data. The calculation unit may be configured to calculate at least one of the position and the orientation of the moving object represented by the second sensor information by transforming the calculated coordinates into coordinates in a global coordinate system. According to this aspect, the machine learning model suitable for the detection of the moving object classified into each state is prepared in advance by learning the first training images including the moving object classified into one state more than the second training images including the moving object classified into the remaining other states. As a result, the calculation unit can accurately detect the moving object from the second sensor information by inputting the second sensor information to the machine learning model selected depending on the state of the moving object from among the machine learning models prepared respectively for the states of the moving object.

In the second aspect of the present disclosure, the machine learning model may be trained in advance to output the shape data, by inputting a plurality of training images including the moving object and a correct answer label that is associated with each of the training images and that indicates the state of the moving object included in the training images. The calculation unit may be configured to acquire the shape data by inputting the second sensor information and the state of the moving object to the machine learning model. The calculation unit may calculate coordinates of a predetermined positioning point set in advance for the moving object in an image coordinate system by using the shape data. The calculation unit may calculate at least one of the position and the orientation of the moving object represented by the second sensor information by transforming the calculated coordinates into coordinates in a global coordinate system. According to this aspect, the machine learning model trained by associating the training images including the moving object with the correct answer label indicating the state of the moving object included in each training image is prepared in advance. As a result, the moving object can be accurately detected from the second sensor information by inputting the second sensor information associated with the state of the moving object to the machine learning model.

A third aspect of the present disclosure relates to an information processing device that is used to cause a moving object to move. In the information processing device, the moving object is configured to move by unmanned driving in a factory in which a plurality of manufacturing steps is executed to manufacture the moving object. The moving object is classified into a plurality of states by having different appearances depending on the manufacturing steps. The information processing device includes a determination information acquisition unit and a determination unit. The determination information acquisition unit is configured to acquire at least one of state information indicating which of the states the state of the moving object is, and step information indicating which of the manufacturing steps the manufacturing step being executed on the moving object is. The determination unit is configured to determine which of a first sensor and a second sensor of a different kind from the first sensor is used to detect the moving object by using at least one of the state information and the step information, for calculating at least one of a position and an orientation of the moving object. According to this aspect, the information processing device can determine which sensor of the first sensor and the second sensor is used to detect the moving object by using at least one of the state information and the step information.

A fourth aspect of the present disclosure provides a factory that manufactures a moving object. In the factory, a plurality of manufacturing steps is executed to manufacture the moving object. The moving object is configured to move by unmanned driving in the factory. The moving object is classified into a plurality of states by having different appearances by the manufacturing steps. The factory includes a first sensor and a second sensor. The first sensor is installed in a first area in which the moving object classified into a first state among the states moves. The second sensor is installed in a second area in which the moving object classified into a second state different from the first state among the states moves. The first sensor is any one of a camera and a LiDAR. The second sensor is the LiDAR in a case where the first sensor is the camera. The second sensor is the camera in a case where the first sensor is the LiDAR. According to this aspect, different kinds of sensors can be installed in the first area and the second area.

In the fourth aspect of the present disclosure, the first sensor may be configured to output first sensor information representing the moving object classified into the first state by detecting the moving object classified into the first state from an outside of the moving object. The second sensor may be configured to output second sensor information representing the moving object classified into the second state by detecting the moving object classified into the second state from the outside. The first sensor information may be used to calculate at least one of a position and an orientation of the moving object represented by the first sensor information. The second sensor information may be used to calculate at least one of the position and the orientation of the moving object represented by the second sensor information. According to this aspect, at least one of the position and the orientation of the moving object classified into the first state can be calculated by detecting the moving object classified into the first state by using any one sensor of the camera and the LiDAR. By detecting the moving object classified into the second state by using a sensor of a different kind from the sensor that detects the moving object classified into the first state out of the camera and the LiDAR, at least one of the position and the orientation of the moving object classified into the second state can be calculated. As a result, the cost needed for calculating at least one of the position and the orientation of the moving object can be reduced.

A fifth aspect of the present disclosure provides a calculation method. In the calculation method of calculating at least one of a position and an orientation of a moving object, the moving object is configured to move by unmanned driving in a factory in which a plurality of manufacturing steps is executed to manufacture the moving object. The moving object is classified into a plurality of states by having different appearances depending on the manufacturing steps. The calculation method includes a sensor information acquisition step of acquiring first sensor information that is output from a first sensor by detecting the moving object classified into a first state among the states via the first sensor from an outside of the moving object and that represents the moving object classified into the first state, and acquiring second sensor information that is output from a second sensor of a different kind from the first sensor by detecting the moving object classified into a second state different from the first state among the states via the second sensor from the outside and that represents the moving object classified into the second state, and a calculation step of calculating at least one of the position and the orientation of the moving object by using the first sensor information without executing preprocessing, and executing the preprocessing to calculate at least one of the position and the orientation of the moving object by using the second sensor information. According to this aspect, at least one of the position and the orientation of the moving object classified into the first state can be calculated by using the first sensor information without executing the preprocessing. The preprocessing can be executed to calculate at least one of the position and the orientation of the moving object classified into the second state by using the second sensor information. In this way, the preprocessing need not be executed when at least one of the position and the orientation of the moving object classified into the first state is calculated. Therefore, the load needed for the preprocessing executed to calculate the position or the like of the moving object can be reduced. Further, according to this aspect, the moving object classified into the first state and the moving object classified into the second state can be detected by different kinds of sensors depending on the price of the sensor. As a result, the possibility that the cost needed for calculating the position or the like of the moving object is increased can be reduced.

In the fifth aspect of the present disclosure, the first sensor information may be information output from one of a camera and a LiDAR by detecting the moving object classified into the first state via the one of the camera and the LiDAR from the outside. The second sensor information may be information output from the other of the camera and the LiDAR by detecting the moving object classified into the second state via the other one of the camera and the LiDAR from the outside. According to this aspect, at least one of the position and the orientation of the moving object classified into the first state can be calculated by detecting the moving object classified into the first state by using one of the camera and the LiDAR. By detecting the moving object classified into the second state by using a sensor of a different kind from the sensor that detects the moving object classified into the first state out of the camera and the LiDAR, at least one of the position and the orientation of the moving object classified into the second state can be calculated. As a result, the cost needed for calculating at least one of the position and the orientation of the moving object can be reduced.

In the fifth aspect of the present disclosure, the calculation method may further include a determination information acquisition step of acquiring at least one of state information indicating which of the states the state of the moving object is, and step information indicating which of the manufacturing steps the manufacturing step being executed on the moving object is, a determination step of determining which of the first sensor and the second sensor is used to detect the moving object by using at least one of the state information and the step information, for calculating at least one of the position and the orientation of the moving object. In the calculation step, at least one of the position and the orientation of the moving object may be calculated by using the first sensor information without executing the preprocessing in a case where a determination is made in the determination step that the moving object is detected by using the first sensor. at least one of the position and the orientation of the moving object may be calculated by using the second sensor information with executing the preprocessing in a case where a determination is made in the determination step that the moving object is detected by using the second sensor. According to this aspect, at least one of the position and the orientation of the moving object can be calculated by using the sensor information acquired by detecting the moving object via the sensor of a kind corresponding to the state of the moving object.

In the fifth aspect of the present disclosure, the first sensor may be one of a camera and a LiDAR, and the second sensor may be the other of the camera and the LiDAR. According to this aspect, at least one of the position and the orientation of the moving object can be calculated by using the sensor information acquired by detecting the moving object via the sensor of a kind corresponding to the state of the moving object.

The present disclosure can be implemented in various forms other than the calculation device, the calculation system, the information processing device, the factory, and the calculation method described above. For example, the present disclosure can be implemented in forms of: a calculation device, an information processing device, a calculation system, and a manufacturing method of a moving object; a calculation device, an information processing device, a calculation system, and a control method of a moving object; a computer program that implements the control method; and a non-transitory recording medium that records the computer program.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram illustrating a configuration of a traveling system in a first embodiment;
FIG. 2 is a diagram illustrating a configuration of a vehicle control device in the first embodiment;
FIG. 3 is a diagram illustrating a state where a vehicle travels in a factory in the first embodiment;
FIG. 4 is a diagram illustrating a configuration of a calculation device;
FIG. 5 is a diagram illustrating a configuration of a remote control device;
FIG. 6 is a flowchart illustrating a processing flow in the first embodiment;
FIG. 7 is a flowchart illustrating an example of a calculation method of a position or the like of the vehicle represented by measurement point group data;
FIG. 8 is a flowchart illustrating an example of a calculation method of a position or the like of the vehicle represented by a captured image;
FIG. 9 is a schematic diagram illustrating an example of each image when the calculation method illustrated in FIG. 8 is executed;
FIG. 10 is a diagram illustrating details of a coordinate point calculation step;

FIG. 11 is a diagram illustrating a calculation method of a base coordinate point;

FIG. 12 is a first diagram illustrating details of a position transformation step;

FIG. 13 is a second diagram illustrating the details of the position transformation step;

FIG. 14 is a diagram illustrating a state where a vehicle travels in a factory in a second embodiment;

FIG. 15 is a diagram illustrating a configuration of a calculation system in the second embodiment;

FIG. 16 is a diagram illustrating a state where a vehicle travels in a factory in a third embodiment;

FIG. 17 is a diagram illustrating a configuration of a calculation system in the third embodiment;

FIG. 18 is a flowchart illustrating a position calculation method of the vehicle using a second detection model;

FIG. 19 is a diagram illustrating a configuration of a calculation system in a fourth embodiment;

FIG. 20 is a diagram illustrating a state where a vehicle travels in a factory in a fifth embodiment;

FIG. 21 is a diagram illustrating a configuration of a calculation system in the fifth embodiment;

FIG. 22 is a first flowchart illustrating a processing flow in the fifth embodiment;

FIG. 23 is a second flowchart illustrating a processing flow in the fifth embodiment;

FIG. 24 is a diagram illustrating a configuration of a traveling system in a sixth embodiment; and

FIG. 25 is a flowchart illustrating a processing flow in the sixth embodiment.

DETAILED DESCRIPTION OF EMBODIMENTS

A. First Embodiment

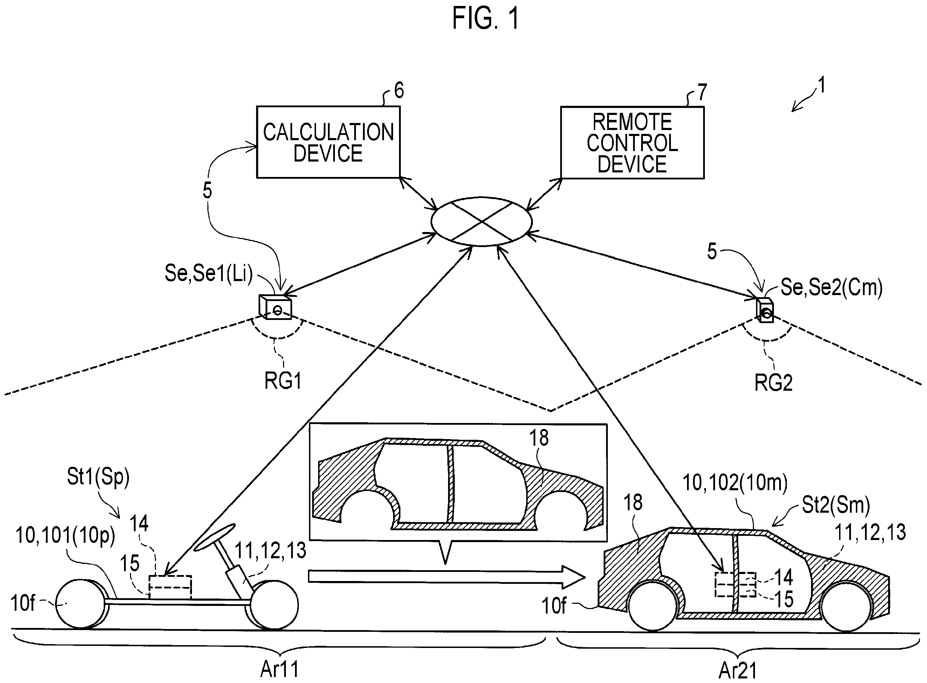

FIG. 1 is a diagram illustrating a configuration of a traveling system 1 in a first embodiment. The traveling system 1 is a system for causing a moving object to move without depending on a driving operation of an occupant who gets on the moving object in a factory that manufactures the moving object. The traveling system 1 includes one or more moving objects, a calculation system 5 including a first sensor Se1, a second sensor Se2, and a calculation device 6, and a remote control device 7.

The "moving object" means an object that can move, for example, a vehicle 10 or an electric vertical take-off and landing aircraft (so-called flying car). In the present embodiment, the moving object is the vehicle 10. The vehicle 10 may be a vehicle that travels by wheels or a vehicle that travels using a caterpillar, and is, for example, a passenger car, a truck, a bus, a two-wheeled vehicle, a four-wheeled vehicle, a tank, and a construction vehicle. The vehicle 10 includes a battery electric vehicle (BEV), a gasoline vehicle, a hybrid electric vehicle, and a fuel cell electric vehicle. In addition, in a case where the moving object is other than the vehicle 10, the expression of "vehicle" and "car" in the present disclosure can be replaced with "moving object" as appropriate, and the expression of "travel" can be replaced with "move" as appropriate.

The vehicle 10 includes a drive device 11, a steering device 12, a braking device 13, a vehicle communication device 14, and a vehicle control device 15. The drive device 11 accelerates the vehicle 10. The drive device 11 includes wheels, a drive power source that rotates the wheels, and a power supply device that supplies power to the drive power source. For example, in a case where the vehicle 10 is a battery electric vehicle, the drive power source is a motor for traveling, and the power supply device is a battery, such as a lithium ion battery. The steering device 12 changes a traveling direction of the vehicle 10. The braking device 13 decelerates the vehicle 10. The vehicle communication device 14 communicates with an external device through wireless communication or the like. The external device is a device, such as the remote control device 7, provided at a place different from the vehicle 10 that is the host vehicle, or another vehicle 10. The vehicle communication device 14 is, for example, a wireless communication device.

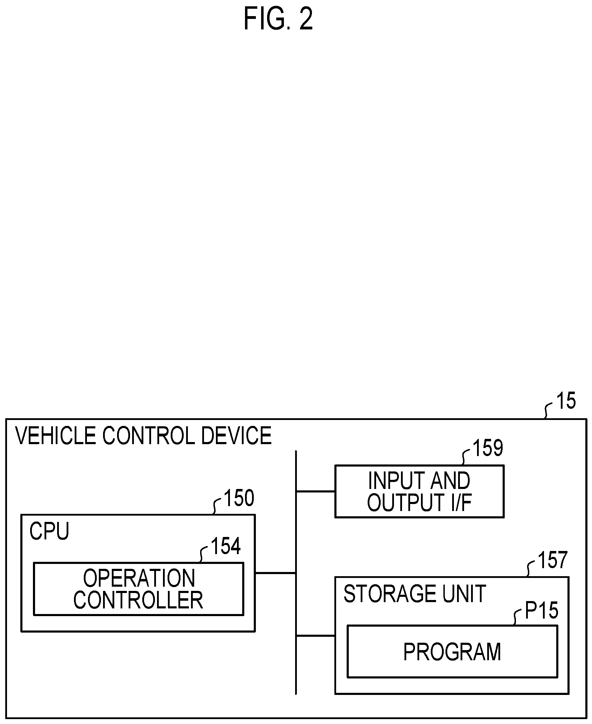

FIG. 2 is a diagram illustrating a configuration of the vehicle control device 15 in the first embodiment. The vehicle control device 15 controls an operation of the vehicle 10. The vehicle control device 15 includes an input and output interface 159, a storage unit 157, and a central processing unit (CPU) 150. In the vehicle control device 15, the input and output interface 159, the storage unit 157, and the CPU 150 are connected to each other to be bidirectionally communicable with each other via a bus or the like. The input and output interface 159 is used to communicate with various devices mounted on the vehicle 10 that is the host vehicle. The storage unit 157 of the vehicle control device 15 stores various kinds of information including various programs P15 for controlling an operation of the vehicle control device 15. The storage unit 157 of the vehicle control device 15 includes, for example, a read-only memory (RAM), a read-only memory (ROM), and a hard disk drive (HDD). The CPU 150 of the vehicle control device 15 functions as an operation controller 154 by loading the various programs P15 stored in the storage unit 157. The operation controller 154 executes a driving control of the vehicle 10 by controlling an operation of an actuator that changes the acceleration and deceleration and a steering angle of the vehicle 10. The "driving control" means, for example, various controls, such as adjustment of the acceleration, the speed, the steering angle, and the like of the vehicle 10, for driving the actuator that exhibits three functions of "traveling", "turning", and "stopping" of the vehicle 10. In the present embodiment, the actuator includes an actuator of the drive device 11, an actuator of the steering device 12, and an actuator of the braking device 13. In addition, at least a part of the functions of the CPU 150 of the vehicle control device 15 may be implemented by a hardware circuit.

The vehicle 10 can travel by the unmanned driving. The "unmanned driving" means driving that does not depend on the driving operation of the occupant. The driving operation means an operation related to at least any one of "traveling", "turning", and "stopping" of the vehicle 10. The unmanned driving is implemented by an automatic or manual remote control using a device provided outside the vehicle 10 or an autonomous control of the vehicle 10. The occupant who does not execute the driving operation may get on the vehicle 10 that travels by the unmanned driving. Examples of the occupant who does not execute the driving operation include a person who simply sits in a seat of the vehicle 10 and a person who executes work different from the driving operation, such as assembly, inspection, or operation of switches, while getting on the vehicle 10. In addition, the driving with the driving operation of the occupant may be referred to as "manned driving".

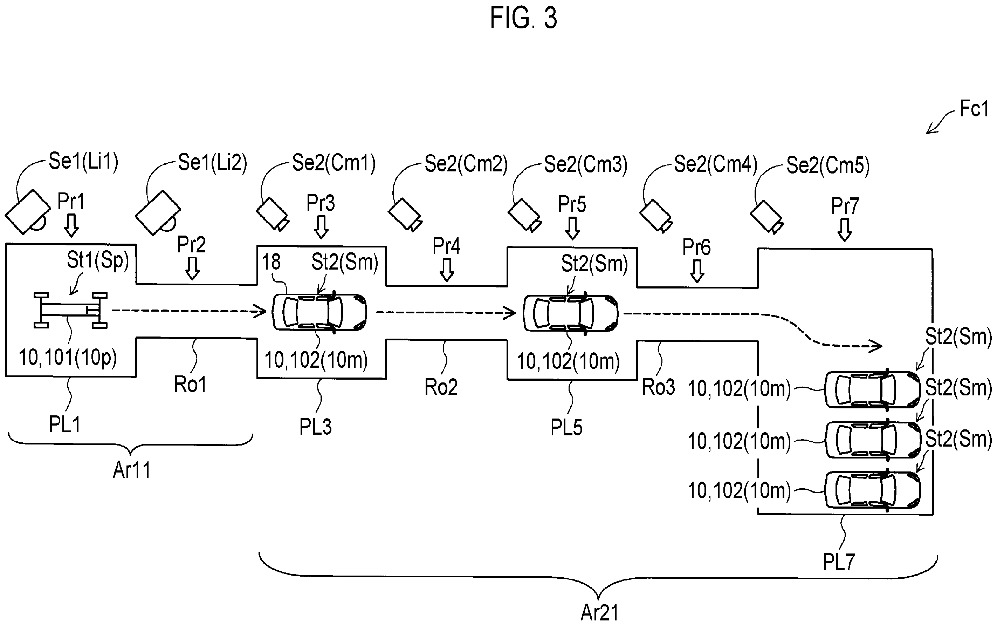

In the present embodiment, the vehicle 10 is remotely controlled by the remote control device 7 to travel by the unmanned driving in at least a part of sections in a factory Fc1. FIG. 3 is a diagram illustrating a state where the vehicle 10 travels in the factory Fc1 in the first embodiment. The factory Fc1 is a place in which manufacturing facilities of the vehicle 10 are installed. The factory Fc1 is also referred to as a manufacturing line of the vehicle 10. In the factory Fc1, a plurality of manufacturing steps Pr1 to Pr7 is executed to manufacture the vehicle 10. In the present embodiment, a platform manufacturing step Pr1, a first transport step Pr2, an assembly step Pr3, a second transport step Pr4, and an inspection step Pr5 are executed in this order as the manufacturing steps Pr1 to Pr7, and as a result, the vehicle 10 as a finished product is manufactured. Then, the vehicle 10 as the finished product is stored in a storage place PL7 in a storage step Pr7, through a third transport step Pr6, until the vehicle 10 is shipped.

The platform manufacturing step Pr1 is a step of manufacturing a platform vehicle 10p. The platform vehicle 10p is the vehicle 10 having a form of the platform. The platform vehicle 10p is the vehicle 10 in the middle of being manufactured and has a configuration capable of traveling by the unmanned driving. As illustrated in FIG. 1, the platform vehicle 10p includes at least the drive device 11, the steering device 12, the braking device 13, and the vehicle control device 15, in order to exhibit the three functions of "traveling", "turning", and "stopping" by the unmanned driving. In the present embodiment, the vehicle 10 acquires information from the remote control device 7 provided at a place different from the vehicle 10 in order to travel by the remote control. Therefore, the platform vehicle 10p further includes the vehicle communication device 14. The platform manufacturing step Pr1 is executed at a manufacturing place PL1.

The assembly step Pr3 illustrated in FIG. 3 is a step of assembling an interior component, such as the seat, and an exterior component, such as the bodyshell 18 that is painted, into the platform vehicle 10p. The assembly step Pr3 is executed at an assembly place PL3.

The inspection step Pr5 is a step of inspecting the manufactured vehicle 10. The inspection step Pr5 is executed at an inspection place PL5.

In the present embodiment, the manufacturing place PL1, the assembly place PL3, the inspection place PL5, and the storage place PL7 exist in different buildings from each other. Therefore, the manufacturing place PL1 and the assembly place PL3 are connected via a first course Ro1. The assembly place PL3 and the inspection place PL5 are connected via a second course Ro2. The inspection place PL5 and the storage place PL7 are connected via a third course Ro3. Each of the first course Ro1, the second course Ro2, and the third course Ro3 may be a private road or may be a public road. The places PL1 to PL4 in which the manufacturing steps Pr1, Pr3, Pr5, Pr7 are respectively executed may exist on one site or may exist over a plurality of sites. In addition, the places PL1 to PL4 in which the manufacturing steps Pr1, Pr3, Pr5, Pr7 are respectively executed may exist at one address or may exist over a plurality of addresses.

The first transport step Pr2 is a step of causing the vehicle 10 to move from the manufacturing place PL1 to the assembly place PL3. The second transport step Pr4 is a step of causing the vehicle 10 to move from the assembly place PL3 to the inspection place PL5. The third transport step Pr6 is a step of causing the vehicle 10 to move from the inspection place PL5 to the storage place PL7.

As illustrated in FIG. 1, the appearance of the vehicle 10 is different between the platform vehicle 10p and an assembled vehicle 10m due to a difference in an appearance shape of the vehicle 10. The assembled vehicle 10m is the vehicle 10 in which at least the bodyshell 18 is assembled into the platform vehicle 10p. In the present embodiment, as illustrated in FIG. 3, the vehicle 10 after the assembly step Pr3 is started is the assembled vehicle 10m. As described above, since the vehicle 10 has different appearances depending on the manufacturing steps Pr1 to Pr7, the vehicle 10 is classified into a plurality of states St1, St2 depending on the appearance of the vehicle 10. In the present embodiment, the vehicle 10 is classified into two states St1, St2 including a first state St1 and a second state St2, before and after the bodyshell 18 is assembled. In the present embodiment, the first state St1 refers to a case where the states St1, St2 of the vehicle 10 are a platform state Sp. The platform state Sp means a state where the vehicle 10 is in a form of the platform. The second state St2 refers to a case where the states St1, St2 of the vehicle 10 are an assembled state Sm. The assembled state Sm means a state where at least the bodyshell 18 is assembled to the platform vehicle 10p. In addition, the number and the kinds of the manufacturing steps Pr1 to Pr7 executed in the factory Fc1, the number and the kinds of the states St1, St2 of the vehicle 10 classified depending on the appearance of the vehicle 10 are not limited to the above.

Hereinafter, the vehicle 101 classified into the first state St1 will be referred to as "first vehicle 101". The vehicle 102 classified into the second state St2 will be referred to as "second vehicle 102". In the present embodiment, the first vehicle 101 is the platform vehicle 10p. The second vehicle 102 is the assembled vehicle 10m. In a case where there is no need to distinguish the vehicles 101, 102 in the states St1, St2, the vehicles 101, 102 will be simply referred to as "vehicle 10".

As illustrated in FIG. 1, the calculation system 5 includes the first sensor Se1 and the second sensor Se2 as external sensors Se provided at a place different from the vehicle 10, and the calculation device 6.

As illustrated in FIG. 3, the first sensor Se1 is installed in a first area Ar11 in the factory Fc1. The first area Ar11 is an area in which the first vehicle 101 travels. In the present embodiment, the first area Ar11 includes the manufacturing place PL1 and the first course Ro1. An installation position, an orientation, and an installation number of the first sensors Se1 in the first area Ar11 are decided in consideration of a detection range RG1 of the first sensor Se1 and the like. The first sensor Se1 detects the first vehicle 101 from the outside, to output first sensor information representing the first vehicle 101 as a detection result. In the present embodiment, the first sensor Se1 is a light detection and ranging (LiDAR) Li. Therefore, in the present embodiment, LiDARs Li1, Li2 as the first sensors Se1 detects the platform vehicle 10p from the outside, to output measurement point group data three-dimensionally representing an appearance shape of the platform vehicle 10p as the first sensor information.

The second sensor Se2 is installed in a second area Ar21 in the factory Fc1. The second area Ar21 is an area in which the second vehicle 102 travels. In the present embodiment, the second area Ar21 includes the assembly place PL3, the second course Ro2, the inspection place PL5, the third course Ro3, and the storage place PL7. An installation position, an orientation, and an installation number of the second sensors Se2 in the second area Ar21 are decided in consideration of a detection range RG2 of the second sensor Se2 and the like. The second sensor Se2 detects the second vehicle 102 from the outside, to output second sensor information representing the second vehicle 102 as a detection result. In the present embodiment, the second sensor Se2 is a visible light camera Cm including an imaging element and an optical system that are sensitive to visible light. Hereinafter, the visible light camera Cm will be also simply referred to as "camera Cm". The camera Cm is, for example, any one of a CCD image sensor and a CMOS image sensor. Therefore, in the present embodiment, cameras Cm1 to Cm5 as the second sensors Se2 image the assembled vehicle 10m from the outside, to output an original image including the assembled vehicle 10m as the second sensor information.

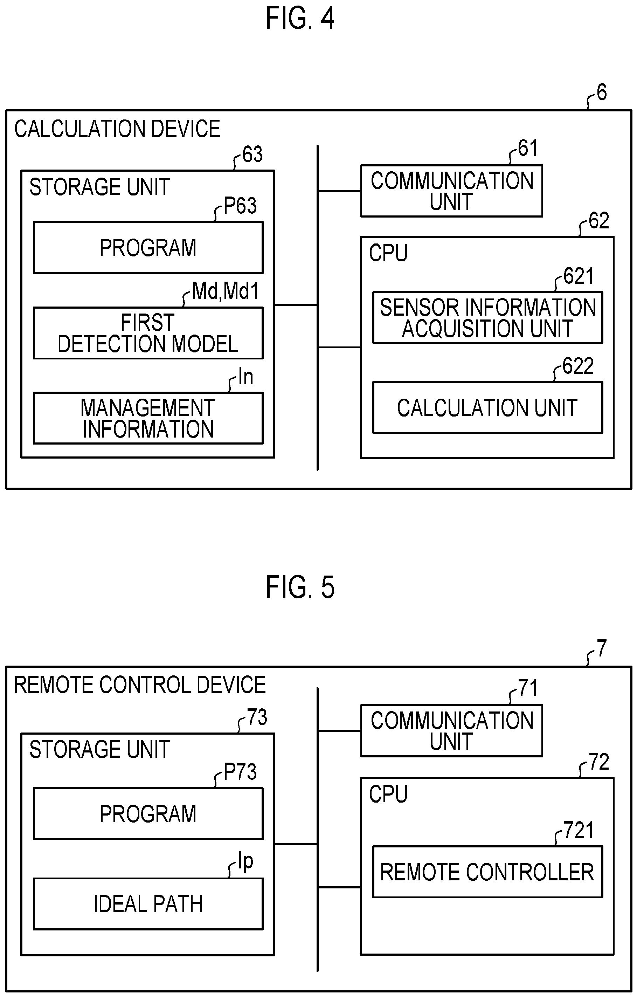

FIG. 4 is a diagram illustrating a configuration of the calculation device 6. The calculation device 6 uses the sensor information as the detection results of the vehicle 10 output from the external sensors Se installed in the factory Fc1, to calculate at least one of a position and an orientation of the vehicle 10. The position of the vehicle 10 is a position of a positioning point 10f set in advance for a specific portion of the vehicle 10. The position of the vehicle 10 is represented by coordinates of X, Y, and Z in a global coordinate system of the factory Fc1. The orientation of the vehicle 10 is a direction represented by a vector from a rear side to a front side of the vehicle 10 along a front-rear axis of the vehicle 10 passing through the center of gravity of the vehicle 10.

The calculation device 6 includes a communication unit 61, a storage unit 63, and a CPU 62. In the calculation device 6, the communication unit 61, the storage unit 63, and the CPU 62 are connected to each other to be bidirectionally communicable with each other via a bus or the like.

The communication unit 61 of the calculation device 6 connects the calculation device 6 to another device other than the calculation device 6 to be communicable with each other. The communication unit 61 of the calculation device 6 is, for example, a wireless communication device.

The storage unit 63 of the calculation device 6 stores various kinds of information including various programs P63 for controlling an operation of the calculation device 6, management information In, and a first detection model Md1 as a detection model Md. The storage unit 63 of the calculation device 6 includes, for example, a RAM, a ROM, and a hard disk drive (HDD).

The management information In is information indicating a traveling order of a plurality of the vehicles 10 that travel in the detection ranges RG1, RG2 of the external sensors Se. In the management information In, vehicle identifiers and sensor identifiers Li1, Li2, Cm1 to Cm5 are associated with each other. The vehicle identifiers are unique identifiers assigned not to overlap between the vehicles 10 to identify the vehicles 10. The sensor identifiers Li1, Li2, Cm1 to Cm5 are unique identifiers assigned not to overlap between the external sensors Se installed in the factory Fc1 to identify the external sensors Se. The management information In is created by using, for example, the position and the orientation of the vehicle 10, a transmission history of traveling control signals to the vehicle 10, and the installation places of the external sensors Se.

The detection model Md is a trained machine learning model that utilizes artificial intelligence that detects the appearance shape of the vehicle 10 represented by a captured image. The detection model Md detects the appearance shape of the vehicle 10 from the captured image to output shape data indicating the appearance shape of the vehicle 10 when the captured image is input. For example, a convolutional neural network (CNN) that implements any one of semantic segmentation and instance segmentation can be used for the detection model Md.

In the present embodiment, the storage unit 63 of the calculation device 6 stores one first detection model Md1 as the detection model Md. The first detection model Md1 detects the vehicle 10 from the captured image to output the shape data when the captured image is input. The captured image is any one of an original image as raw data output from the camera Cm, and a processed image obtained by processing the original image. The first detection model Md1 is trained in advance through supervised learning using a first data set for learning. The first data set for learning includes a plurality of training images including the vehicle 10 and a region correct answer label indicating whether each region in the training image is a region indicating the vehicle 10 or a region indicating a vehicle other than the vehicle 10. When the CNN is trained, parameters of the CNN are preferably updated by backpropagation (error backpropagation method) to reduce an error between the output result of the first detection model Md1 and the region correct answer label.

As illustrated in FIG. 4, the CPU 62 of the calculation device 6 functions as a sensor information acquisition unit 621 and a calculation unit 622 by loading the various programs P63 stored in the storage unit 63.

The sensor information acquisition unit 621 acquires the sensor information output from the external sensors Se that include the vehicle 10 as a calculation target in the detection ranges RG1, RG2. In the present embodiment, the sensor information acquisition unit 621 specifies the external sensors Se that include the vehicle 10 as the calculation target in the detection ranges RG1, RG2 by using the management information In stored in the storage unit 63 of the calculation device 6. The sensor information acquisition unit 621 acquires the sensor information output from the specified external sensors Se.

The calculation unit 622 calculates at least one of the position and the orientation of the vehicle 10 by using the sensor information acquired by the sensor information acquisition unit 621. Specifically, in a case where the first sensor information is acquired by the sensor information acquisition unit 621, the calculation unit 622 calculates at least one of the position and the orientation of the first vehicle 101 represented by the first sensor information by using the first sensor information without executing preprocessing. In a case where the second sensor information is acquired by the sensor information acquisition unit 621, the calculation unit 622 executes the preprocessing to calculate at least one of the position and the orientation of the second vehicle 102 represented by the second sensor information by using the second sensor information. In the present embodiment, the preprocessing is learning processing of training the first detection model Md1 as the machine learning model. Therefore, in a case where the sensor information acquisition unit 621 acquires the measurement point group data, the calculation unit 622 calculates the position and the orientation of the platform vehicle 10p represented by the measurement point group data by using the measurement point group data without executing the learning processing. In a case where the sensor information acquisition unit 621 acquires the original image, the calculation unit 622 calculates the position and the orientation of the assembled vehicle 10m represented by the captured image by using the first detection model Md1 trained by executing the learning processing, and the captured image. Then, the calculation unit 622 transmits position direction information indicating the calculation results of the position and the orientation of the vehicle 10 to the remote control device 7. In addition, at least a part of the functions of the CPU 62 of the calculation device 6 may be implemented by a hardware circuit.

FIG. 5 is a diagram illustrating a configuration of the remote control device 7. The remote control device 7 generates the traveling control signal that defines a traveling operation of the vehicle 10, and transmits the generated traveling control signal to the vehicle 10. The remote control device 7 includes a communication unit 71, a storage unit 73, and a CPU 72. In the remote control device 7, the communication unit 71, the storage unit 73, and the CPU 72 are connected to each other to be bidirectionally communicable with each other via a bus or the like.

The communication unit 71 of the remote control device 7 connects another device other than the remote control device 7 and the remote control device 7 to be communicable with each other. The communication unit 71 of the remote control device 7 is, for example, a wireless communication device.

The storage unit 73 of the remote control device 7 stores various kinds of information including various programs P73 for controlling an operation of the remote control device 7, and an ideal path Ip. The ideal path Ip is a path on which the vehicle 10 should travel. The ideal path Ip is represented by a node indicating a departure point, a node indicating a passing point, a node indicating a destination, and a link connecting each node. The storage unit 73 of the remote control device 7 includes, for example, a RAM, a ROM, and a hard disk drive (HDD).

The CPU 72 of the remote control device 7 functions as a remote controller 721 by loading the various programs P73 stored in the storage unit 73. The remote controller 721 generates the traveling control signal and transmits the generated traveling control signal to the vehicle 10, to remotely control the traveling operation of the vehicle 10. First, the remote controller 721 decides a target position to which the vehicle 10 should head next, in order to generate the traveling control signal. In the present embodiment, the target position is represented by the coordinates of X, Y, and Z in the global coordinate system of the factory Fc1. The remote controller 721 decides the target position to which the vehicle 10 should head next, by using the position direction information and the ideal path Ip. The remote controller 721 decides the target position on the ideal path Ip ahead of a current position of the vehicle 10. The remote controller 721 generates the traveling control signal for causing the vehicle 10 to travel toward the decided target position. In the present embodiment, the traveling control signal includes the acceleration and the steering angle of the vehicle 10 as the parameters. The remote controller 721 calculates a traveling speed of the vehicle 10 from a transition of the position of the vehicle 10, and compares the calculated traveling speed with a predetermined target speed of the vehicle 10. The remote controller 721 decides the acceleration such that the vehicle 10 accelerates in a case where the traveling speed is lower than the target speed, and decides the acceleration such that the vehicle 10 decelerates in a case where the traveling speed is higher than the target speed. The remote controller 721 decides the steering angle such that the vehicle 10 does not deviate from the ideal path Ip in a case where the vehicle 10 is located on the ideal path Ip, and decides the steering angle such that the vehicle 10 returns to the ideal path Ip in a case where the vehicle 10 is not located on the ideal path Ip, in other words, in a case where the vehicle 10 deviates from the ideal path Ip. In this way, the remote controller 721 generates the traveling control signal including the acceleration and the steering angle of the vehicle 10 as the parameters. The remote controller 721 transmits the generated traveling control signal to the vehicle 10. The remote controller 721 repeatedly executes the acquisition of the position direction information, the decision of the target position, the generation of the traveling control signal, and the transmission of the traveling control signal at a predetermined cycle. In addition, at least a part of the functions of the CPU 72 of the remote control device 7 may be implemented by a hardware circuit.

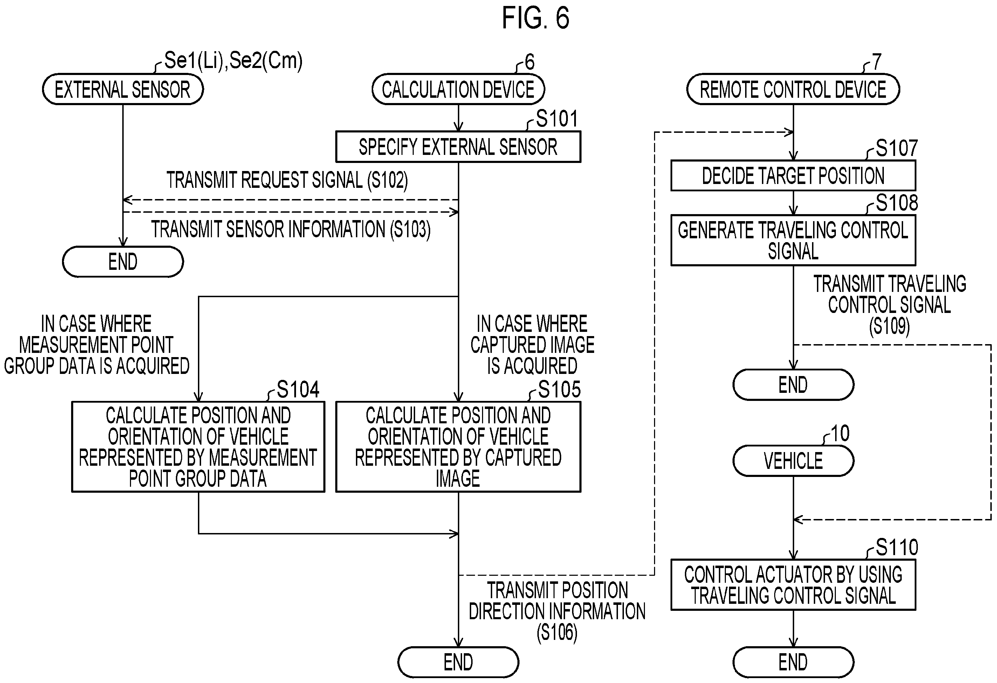

FIG. 6 is a flowchart illustrating a processing flow in the first embodiment. The processing flow illustrated in FIG. 6 is repeatedly executed at predetermined time intervals, for example, from a point in time when the vehicle 10 starts traveling by the unmanned driving.

In step S101, the sensor information acquisition unit 621 of the calculation device 6 specifies the external sensors Se that include the vehicle 10 as the calculation target in the detection ranges RG1, RG2 among the external sensors Se installed in the factory Fc1 by using the management information In. In step S102, the sensor information acquisition unit 621 transmits a request signal for acquiring the sensor information to the specified external sensors Se. In step S103, the external sensors Se that receive the request signal transmit the sensor information to the calculation device 6. In a case where the sensor information acquisition unit 621 of the calculation device 6 acquires the measurement point group data, in step S 104, the calculation unit 622 calculates the position and the orientation of the platform vehicle 10p represented by the measurement point group data by using the measurement point group data without using the first detection model Md1. In a case where the sensor information acquisition unit 621 of the calculation device 6 acquires the captured image as the original image, in step S105, the calculation unit 622 calculates the position and the orientation of the assembled vehicle 10m represented by the captured image by using the first detection model Md1 and the captured image. In step S106, the calculation unit 622 transmits the position direction information to the remote control device 7.

In step S107, the remote controller 721 of the remote control device 7 decides the target position to which the vehicle 10 should head next, by using the position direction information and the ideal path Ip. In step S108, the remote controller 721 generates the traveling control signal for causing the vehicle 10 to travel toward the decided target position. In step S109, the remote controller 721 transmits the traveling control signal to the vehicle 10. In step S110, the operation controller 154 of the vehicle control device 15 mounted on the vehicle 10 controls the actuator by using the received traveling control signal to cause the vehicle 10 to travel at the acceleration and the steering angle represented by the traveling control signal. The vehicle control device 15 repeatedly executes the reception of the traveling control signal and the control of the actuator at a predetermined cycle.

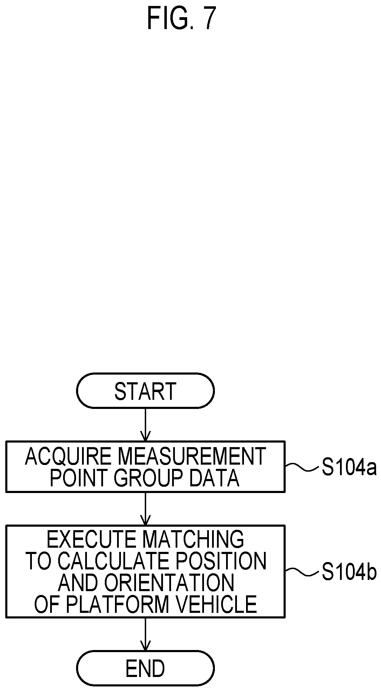

FIG. 7 is a flowchart illustrating an example of a calculation method of calculating the position and the orientation of the platform vehicle 10p represented by the measurement point group data by using the measurement point group data without using the first detection model Md1. In the example illustrated in FIG. 7, the calculation unit 622 executes matching between the measurement point group data and point group data for reference prepared in advance, to calculate the position and the orientation of the platform vehicle 10p represented by the measurement point group data. The point group data for reference is, for example, three-dimensional CAD data of the platform vehicle 10p. For the matching between the measurement point group data and the point group data for reference, for example, an algorithm of iterative closest point (ICP) or normal distribution transform (NDT) is used.

In step S104a, the calculation unit 622 acquires the measurement point group data. In step S104b, the calculation unit 622 executes matching between the measurement point group data and the point group data for reference, to calculate the position and the orientation of the platform vehicle 10p represented by the measurement point group data.

In addition, the calculation method of the position and the orientation of the vehicle 10 represented by the measurement point group data is not limited to the above. The calculation unit 622 may calculate the position and the orientation of the vehicle 10 by using, for example, a distance between the LiDAR Li and the vehicle 10, and an angle difference between an optical axis reference of the LiDAR Li and the vector from the LiDAR Li to the vehicle 10 without executing the matching.

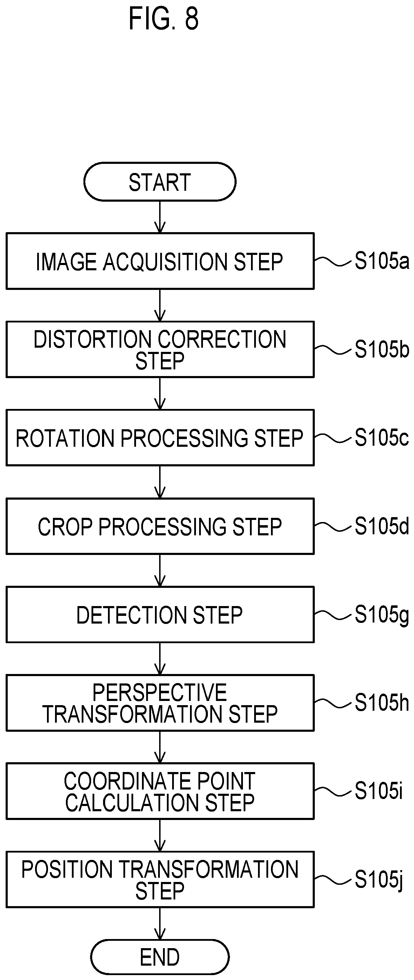

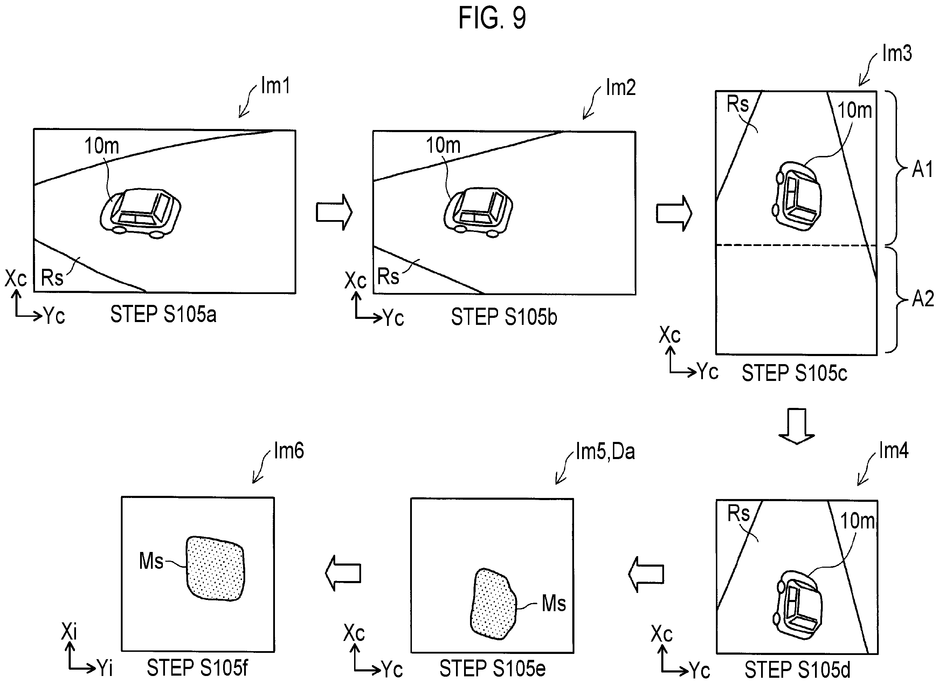

FIG. 8 is a flowchart illustrating an example of a calculation method of calculating the position and the orientation of the assembled vehicle 10m represented by the captured image by using the first detection model Md1 and the captured image. FIG. 9 is a schematic diagram illustrating an example of each of various images Im1 to Im6 when the calculation method illustrated in FIG. 8 is executed. In FIG. 9, step numbers corresponding to the steps of FIG. 8 are added.

In the example illustrated in FIG. 8, the calculation unit 622 uses an optical flow method to calculate the orientation of the assembled vehicle 10m based on an orientation of a movement vector V of the assembled vehicle 10m calculated from a positional change of a feature point of the assembled vehicle 10m between frames of the captured image. The calculation unit 622 acquires shape data Da indicating an appearance shape of the assembled vehicle 10m by inputting captured images Im1 to Im4 to the first detection model Md1. The calculation unit 622 calculates coordinates of the positioning point 10f of the assembled vehicle 10m in an image coordinate system by using the shape data Da, and transforms the calculated coordinates into coordinates in the global coordinate system to calculate the position of the assembled vehicle 10m. Hereinafter, a method of generating the shape data Da and a position calculation method of the vehicle 10 using the shape data Da will be described.

In an image acquisition step of step S105a, the calculation unit 622 acquires an original image Im1 output from the camera Cm. In a distortion correction step of step S105b, the calculation unit 622 corrects the distortion of the original image Im1, to generate a corrected image Im2 as the processed image. In a rotation processing step of step S105c, the calculation unit 622 rotates the corrected image Im2 such that a direction of the movement vector indicating the movement direction of the assembled vehicle 10m included in the corrected image Im2 faces a predetermined direction. As a result, the calculation unit 622 generates a rotated image Im3 as the processed image. In a crop processing step of step S105d, the calculation unit 622 deletes an unneeded region A2 other than a needed region A1 including the assembled vehicle 10m and a peripheral region of the assembled vehicle 10m among the regions forming the corrected image Im2 from the rotated image Im3. As a result, the calculation unit 622 generates a post-processing image Im4 as the processed image. Each of the steps from step S105b to step S105d is an image processing step of executing the preprocessing for improving the detection accuracy when the assembled vehicle 10m is detected from the captured images Im1 to Im4. Therefore, at least any one of the steps from S105b to S105d may be omitted.

In a detection step of step S105g, the calculation unit 622 inputs the post-processing image Im4 to the first detection model Md1. As a result, the calculation unit 622 detects the assembled vehicle 10m from the post-processing image Im4 to acquire a first mask image Im5 as the shape data Da. The first mask image Im5 is an image obtained by masking a region indicating the assembled vehicle 10m among the regions forming the post-processing image Im4, to add a mask region Ms to the post-processing image Im4.

In a perspective transformation step of step S105h, the calculation unit 622 generates a second mask image Im6 by executing perspective transformation on the first mask image Im5. The calculation unit 622 executes the perspective transformation on the first mask image Im5 to a bird's-eye view image of the assembled vehicle 10m seen from an upper viewpoint substantially perpendicular to a road surface Rs by using, for example, predetermined perspective transformation parameters. The perspective transformation parameters are, for example, a parameter related to position information of the camera Cm obtained by calibration and an internal parameter. As a result, the calculation unit 622 generates the second mask image Im6 represented in the image coordinate system from the first mask image Im5 represented in a camera coordinate system. The camera coordinate system is a coordinate system having coordinate axes represented by an Xc axis and a Yc axis orthogonal to the Xc axis, with the focus of the camera Cm as an origin. The image coordinate system is a coordinate system having coordinate axes represented by an Xi axis and a Yi axis orthogonal to the Xi axis, with one point of an image plane projected by the perspective transformation as an origin.

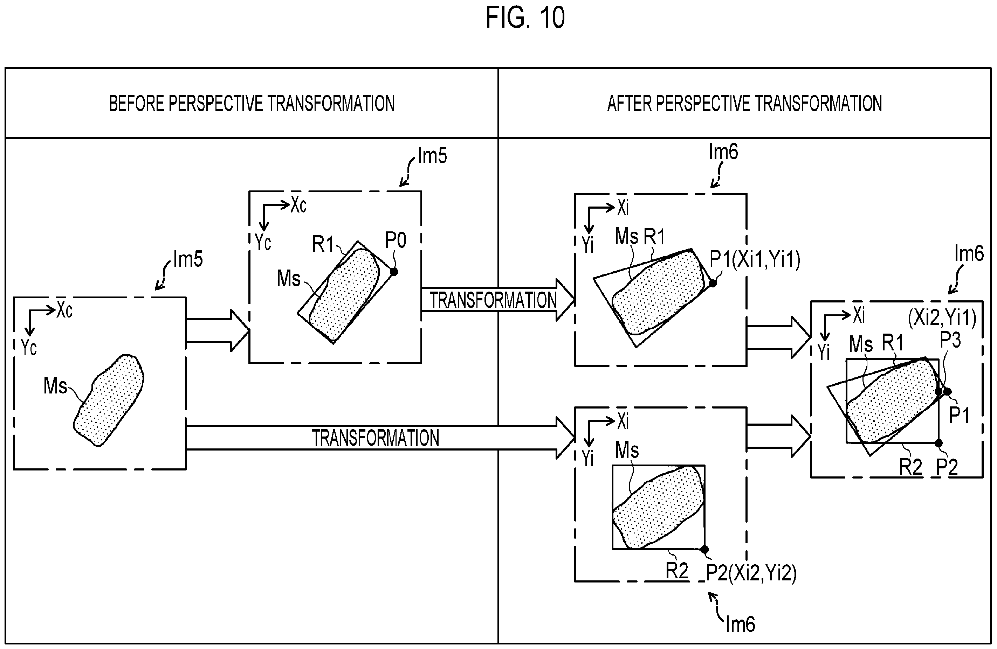

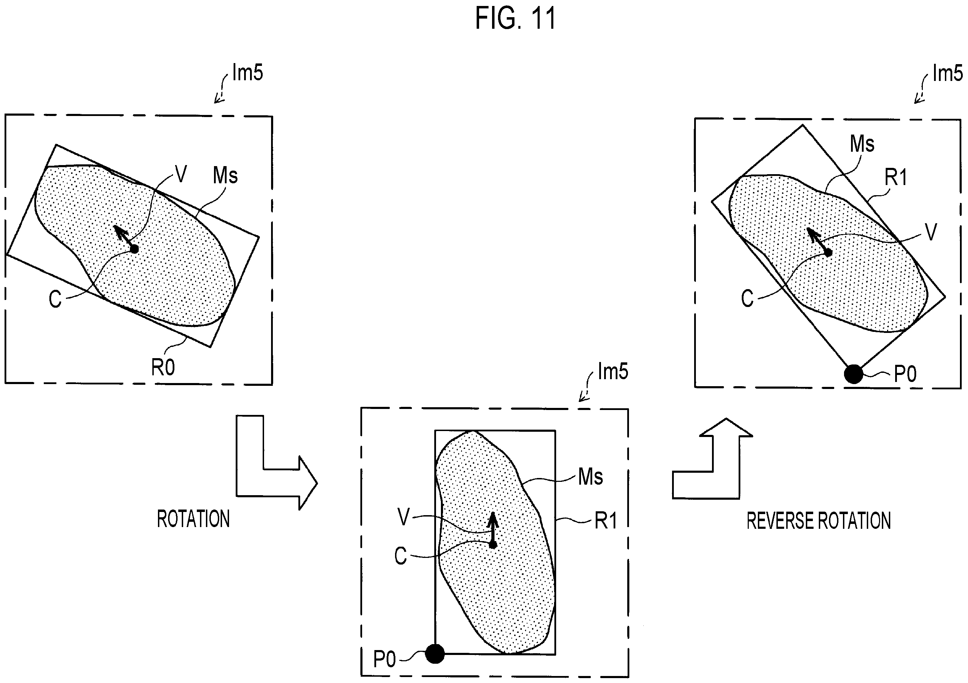

In a coordinate point calculation step of step S105i, the calculation unit 622 calculates an image coordinate point indicating the position of the assembled vehicle 10m in the image coordinate system. FIG. 10 is a diagram illustrating details of the coordinate point calculation step. In order to calculate the image coordinate point, the calculation unit 622 first calculates a base coordinate point P0 from a first circumscribed rectangle R1 set for the mask region Ms in the first mask image Im5 that is the image before the perspective transformation. FIG. 11 is a diagram illustrating a calculation method of the base coordinate point P0. In order to calculate the base coordinate point P0, the calculation unit 622 sets a base circumscribed rectangle R0 for the mask region Ms in the first mask image Im5. Next, the calculation unit 622 rotates the first mask image Im5 by a needed rotation amount, with a center of gravity C of the mask region Ms as a rotation center, such that a direction of the movement vector V of the assembled vehicle 10m corresponding to the mask region Ms in the first mask image Im5 faces a predetermined direction. The predetermined direction is, for example, an up direction on a screen of a display device that displays the first mask image Im5. Then, the calculation unit 622 sets the first circumscribed rectangle R1 for the mask region Ms of the rotated first mask image Im5 such that a long side is parallel to the movement vector V. Then, the calculation unit 622 reversely rotates the first mask image Im5 to which the first circumscribed rectangle R1 is added by the rotation amount with the center of gravity C of the mask region Ms as the rotation center. As a result, the calculation unit 622 sets a coordinate point of a vertex that is one of four vertices of the first circumscribed rectangle R1 and has the coordinates closest to the positioning point 10f of the assembled vehicle 10m, as the base coordinate point P0.

Next, as illustrated in FIG. 10, the calculation unit 622 executes the perspective transformation on the first mask image Im5 after the reverse rotation, that is, the first mask image Im5 after the base coordinate point P0 is calculated. As a result, the calculation unit 622 sets the coordinate point corresponding to the base coordinate point P0 in the first circumscribed rectangle R1 deformed by the perspective transformation, as a first coordinate point P1.

Next, the calculation unit 622 sets a second circumscribed rectangle R2 for the mask region Ms in the second mask image Im6 obtained by executing the perspective transformation on the first mask image Im5. Then, the calculation unit 622 sets a vertex indicating the same position as the first coordinate point P1 among vertices of the second circumscribed rectangle R2, as a second coordinate point P2. That is, the first coordinate point P1 and the second coordinate point P2 are coordinate points indicating the same position, and thus the first coordinate point P1 and the second coordinate point P2 have a correlation.

Next, the calculation unit 622 executes correction in which coordinates (Xi1, Yi1) of the first coordinate point P1 are replaced with coordinates (Xi2, Yi2) of the second coordinate point P2 depending on a magnitude relationship between a coordinate value of the first coordinate point P1 and a coordinate value of the second coordinate point P2. In a case where the coordinate value Xi 1 of the first coordinate point P1 in the Xi direction is larger than the coordinate value Xi2 of the second coordinate point P2 in the Xi direction (Xi1 > Xi2), the calculation unit 622 replaces the coordinate value Xi1 of the first coordinate point P1 in the Xi direction with the coordinate value Xi2 of the second coordinate point P2 in the Xi direction. In a case where the coordinate value Yi1 of the first coordinate point P1 in the Yi direction is larger than the coordinate value Yi2 of the second coordinate point P2 in the Yi direction (Yi1 > Yi2), the calculation unit 622 replaces the coordinate value Yi1 of the first coordinate point P1 in the Yi direction with the coordinate value Yi2 of the second coordinate point P2 in the Yi direction. In the example illustrated in FIG. 10, the coordinate value Xi 1 of the first coordinate point P1 in the Xi direction is larger than the coordinate value Xi2 of the second coordinate point P2 in the Xi direction. The coordinate value Yi1 of the first coordinate point P1 in the Yi direction is smaller than the coordinate value Yi2 of the second coordinate point P2 in the Yi direction. Therefore, an image coordinate point P3 has the coordinates (Xi2, Yi1). As described above, the calculation unit 622 calculates the image coordinate point P3 indicating the position of the assembled vehicle 10m in the image coordinate system by correcting the first coordinate point P1 using the second coordinate point P2.

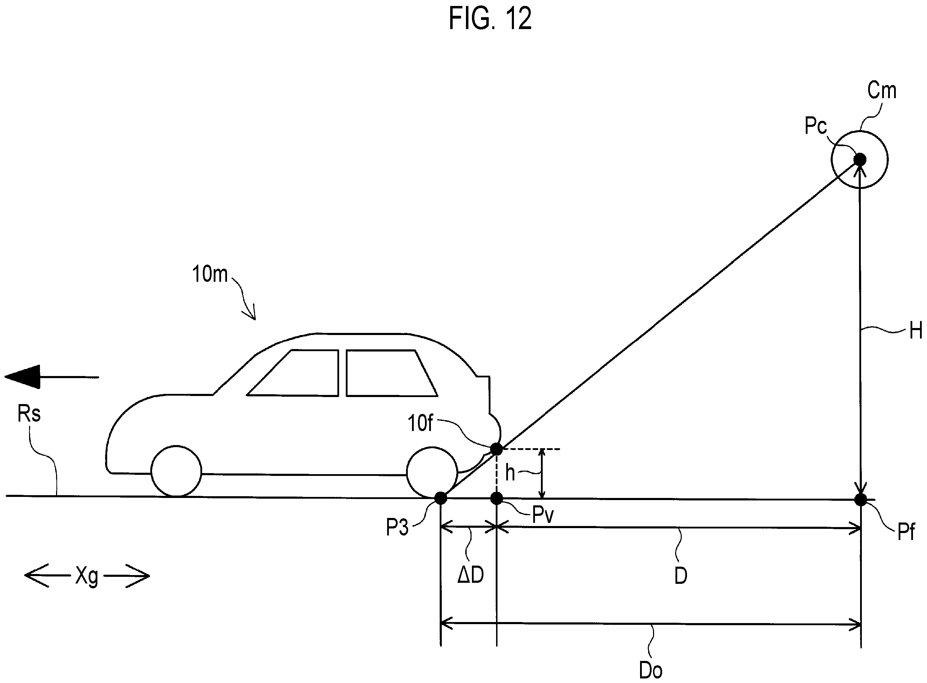

In a position transformation step of step S105j, the calculation unit 622 calculates a vehicle coordinate point indicating the position of the positioning point 10f of the assembled vehicle 10m in the global coordinate system by transforming the image coordinate point P3 into the vehicle coordinate point. The calculation unit 622 uses relational expressions from the following expression (1) to expression (3) in which the vehicle coordinate point is included as an objective variable, and the image coordinate point P3, an imaging parameter, and a vehicle parameter are included as explanatory variables, to transform the image coordinate point P3 into the vehicle coordinate point. The imaging parameter is a parameter related to a distance from a predetermined reference point of the camera Cm. In the present embodiment, the imaging parameter is a height H (FIG. 12 described below) of the camera Cm from the road surface Rs. The vehicle parameter is a parameter related to a distance from a reference point of the positioning point 10f of the assembled vehicle 10m. In the present embodiment, the vehicle parameter is a height h (see FIG. 12 described below) of the positioning point 10f of the assembled vehicle 10m from the road surface Rs.

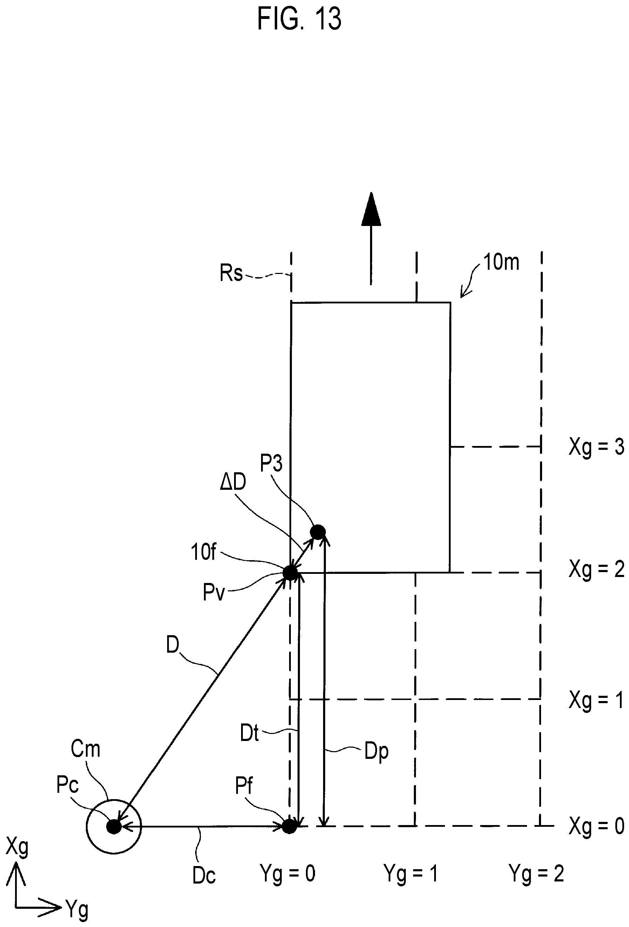

FIG. 12 is a first diagram illustrating details of the position transformation step. FIG. 12 illustrates a state of the assembled vehicle 10m when viewed from a left surface side. FIG. 13 is a second diagram illustrating the details of the position transformation step. FIG. 13 illustrates a state of the assembled vehicle 10m as viewed from a roof side. The global coordinate system illustrated in FIGS. 12 and 13 is a coordinate system having coordinate axes represented by an Xg axis and a Yg axis orthogonal to the Xg axis, with a fixed coordinate point Pf indicating any reference position on the road surface Rs as an origin. An imaging coordinate point Pc is a coordinate point indicating a position of the camera Cm that outputs the original image Im1 used to calculate the image coordinate point P3, in the global coordinate system. The fixed coordinate point Pf and the imaging coordinate point Pc are stored in advance in, for example, the storage unit 63 of the calculation device 6.

As illustrated in FIG. 12, an observation distance on an XgYg plane between the position of the camera Cm and the position (image coordinate point P3) of the assembled vehicle 10m is denoted by Do. An observation error is denoted by $\Delta D$. The height [m] of the camera Cm from the road surface Rs as the imaging parameter is denoted by H. The height [m] of the positioning point 10f of the assembled vehicle 10m from the road surface Rs as the vehicle parameter is denoted by h. In this case, the observation error $\Delta D$ can be represented by the following expression (1).

$$\Delta D = h/H \times Do \qquad \text{Expression (1)}$$

That is, the observation error $\Delta D$ is larger as the observation distance Do is larger.

In a case where an actual distance between the position of the camera Cm and the position of the positioning point 10f of the assembled vehicle 10m is defined as a first distance D, the first distance D can be represented by the following expression (2).

$$D = Do \times (1 - h/H) \qquad \text{Expression (2)}$$

That is, the first distance D is decided depending on the observation distance Do, the height H of the camera Cm as the imaging parameter, and the height h of the positioning point 10f of the assembled vehicle 10m as the vehicle parameter.

As illustrated in FIG. 13, in a case where a distance between the reference position and an estimated position of the assembled vehicle 10m is defined as an estimated distance Dp, and an actual distance between the reference position and the assembled vehicle 10m is defined as a second distance Dt, the second distance Dt can be represented by the following expression (3).

$$Dt = Dp \times (1 - h/H) \qquad \text{Expression (3)}$$

Here, the estimated distance Dp can be calculated by using a third distance Dc that is an actual distance obtained from the fixed coordinate point Pf and the imaging coordinate point Pc, the image coordinate point P3, and the fixed coordinate point Pf. Therefore, the calculation unit 622 calculates a vehicle coordinate point Pv by using the second distance Dt obtained by correcting the estimated distance Dp using the above expression (3), and the fixed coordinate point Pf. In this case, since the calculated vehicle coordinate point Pv is a coordinate point indicating the position of the positioning point 10f of the assembled vehicle 10m in the global coordinate system, the calculated vehicle coordinate point Pv corresponds to the position of the assembled vehicle 10m in the real space.

In addition, the calculation method of the position and the orientation of the vehicle 10 represented by the captured images Im1 to Im4 is not limited to the above. The calculation unit 622 may calculate the orientation of the vehicle 10 by using output results of a yaw rate sensor and the like mounted on the vehicle 10, for example.

According to the first embodiment, in order to cause the vehicle 10 to travel by the remote control, the calculation device 6 acquires the sensor information from the external sensors Se and detects the appearance shape of the vehicle 10 represented by the sensor information, to calculate the position or the like of the vehicle 10. In this case, since the vehicle 10 as the calculation target travels in the factory Fc1, the vehicle 10 has different appearances depending on the manufacturing steps Pr1 to Pr7. In a case where the appearance shape of the vehicle 10 is detected by using the detection model Md as the machine learning model trained by executing the learning processing, the feature value extracted when the first detection model Md1 is trained is different depending on the states St1, St2 of the vehicle 10. Therefore, in order to suppress the decrease in the detection accuracy when the appearance shape of the vehicle 10 is detected from the sensor information due to the difference in the appearance of the vehicle 10, the appearance shape of the vehicle 10 is desirably detected by using the detection model Md, as follows. In this case, the detection model Md for detecting the appearance shape of the vehicle 10 represented by the sensor information is desirably trained for each of the states St1, St2 of the vehicle 10 corresponding to the appearances of the vehicle 10. However, in a case where the detection model Md is trained for each of the states St1, St2 of the vehicle 10, the data for learning may need to be prepared for each of the states St1, St2 of the vehicle 10, or the learning time may be longer by the number of the states St1, St2 of the vehicle 10. Meanwhile, according to the first embodiment, in the factory Fc1, the first sensor Se1 is installed in the first area Ar11, and the second sensor Se2 of a different kind from the first sensor Se1 is installed in the second area Ar21. As a result, when the position or the like of the first vehicle 101 is calculated, the calculation device 6 can execute the following processing. In this case, the calculation device 6 can acquire the first sensor information representing the first vehicle 101 output from the first sensor Se1 by detecting the first vehicle 101 from the outside via the first sensor Se1. The calculation device 6 can calculate the position or the like of the first vehicle 101 represented by the first sensor information by using the first sensor information without executing the learning processing. When the position or the like of the second vehicle 102 is calculated, the calculation device 6 can execute the following processing. In this case, the calculation device 6 can acquire the second sensor information representing the second vehicle 102 output from the second sensor Se2 by detecting the second vehicle 102 from the outside via the second sensor Se2. The calculation device 6 can calculate the position or the like of the second vehicle 102 represented by the second sensor information by using the first detection model Md1 as the detection model Md and the captured image. In this way, the feature value of the first vehicle 101 need not be learned by the first detection model Md1. Therefore, the time and effort for preparing the data for learning for the first vehicle 101 can be saved. Further, the time needed for learning the feature value of the first vehicle 101 can be reduced among the time needed for training the first detection model Md1. As a result, the learning time of the first detection model Md1 can be shortened. From the above, the load needed for the learning processing can be reduced in a state where the possibility that the detection accuracy when the appearance shape of the vehicle 10 is detected from the first sensor information is decreased is reduced.

Here, in order to reduce the load needed for the learning processing, a method of calculating the position or the like of the vehicle 10 without executing the learning processing for the vehicle 10 in either state St1, St2 is conceivable. However, depending on the kinds of the external sensors Se, even in a case where the position or the like of the vehicle 10 can be calculated without executing the learning processing, the cost needed for calculating the position or the like of the vehicle 10 may be higher than the cost needed for executing the learning processing to calculate the position or the like of the vehicle 10. Meanwhile, according to the first embodiment, the external sensors Se of different kinds can be installed in the first area Ar11 and the second area Ar21 depending on the price of the external sensors Se. As a result, the possibility that the cost needed for calculating the position or the like of the vehicle 10 is increased can be reduced.

According to the first embodiment, the first sensor Se1 is the LiDAR Li that outputs the measurement point group data as the first sensor information. The calculation device 6 can execute the matching between the measurement point group data and the point group data for reference, to calculate the position or the like of the first vehicle 101 represented by the measurement point group data without using the detection model Md.

According to the first embodiment, the second sensor Se2 is the camera Cm that outputs the original image Im1 as the second sensor information. The calculation device 6 can acquire the shape data Da by inputting the captured images Im1 to Im4 to the first detection model Md1, calculate the image coordinate point P3 by using the shape data Da, and calculate the position or the like of the second vehicle 102 by transforming the image coordinate point P3 into the vehicle coordinate point Pv.

According to the first embodiment, the calculation device 6 can calculate the position or the like of the first vehicle 101 by using the measurement point group data output from the LiDAR Li without executing the learning processing. However, the LiDAR Li is generally more expensive than the camera Cm. Therefore, in a case where the vehicle 10 in either state St1, St2 is detected by the LiDAR Li, the cost needed for calculating the position or the like of the vehicle 10 is higher than in a case where any one of the states St1, St2 is detected by the camera Cm. Meanwhile, according to the first embodiment, the calculation device 6 can calculate the position or the like by using the first detection model Md1 trained by executing the learning processing and the captured images Im1 to Im4 for the second vehicle 102. As a result, the possibility that the cost needed for calculating the position or the like of the second vehicle 102 is increased can be reduced. Therefore, the calculation device 6 can calculate the position or the like of the vehicle 10 at a low cost while reducing the load needed for the learning processing executed to calculate the position or the like of the vehicle 10.

According to the first embodiment, the traveling system 1 can cause the vehicle 10 to travel by the remote control in the factory Fc1. Therefore, the traveling system 1 can cause the vehicle 10 to move in the factory Fc1 without using a transport facility, such as a crane or a conveyor.

B. Second Embodiment

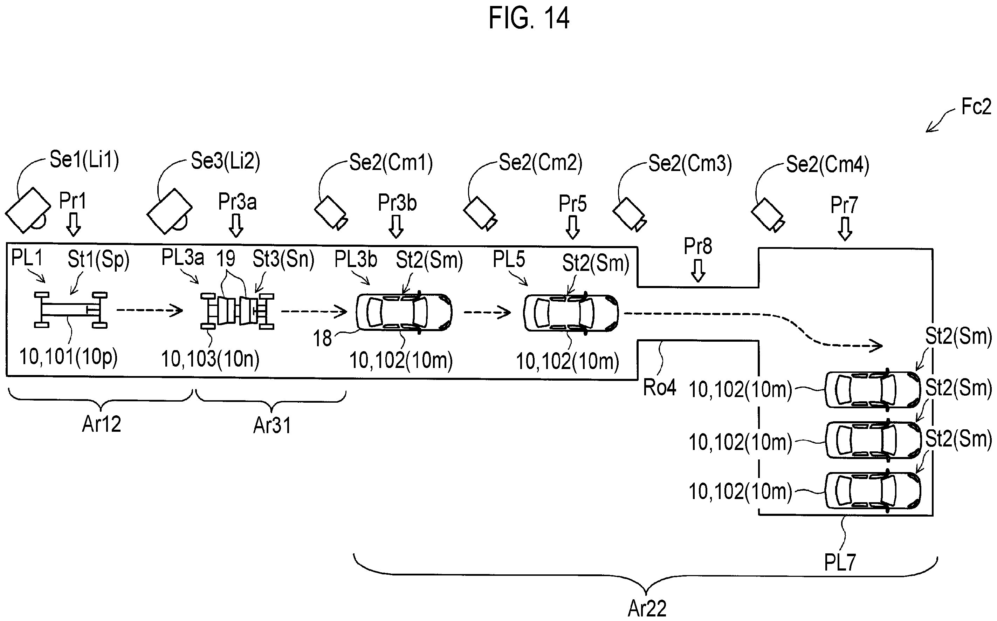

FIG. 14 is a diagram illustrating a state where the vehicle 10 travels in a factory Fc2 in a second embodiment. In the present embodiment, the platform manufacturing step Pr1, a first assembly step Pr3a, a second assembly step Pr3b, and the inspection step Pr5 are executed in this order as a plurality of manufacturing steps Pr1 to Pr8, and as a result, the vehicle 10 as a finished product is manufactured. Then, the vehicle 10 as the finished product is stored in a storage place PL7 in a storage step Pr7, through a transport step Pr8, until the vehicle 10 is shipped.

The platform manufacturing step Pr1 and the inspection step Pr5 are the same as in the first embodiment. The first assembly step Pr3a is a step of assembling an interior component, such as a seat 19, into the platform vehicle 10p. The first assembly step Pr3a is executed at a first assembly place PL3a. The second assembly step Pr3b is a step of assembling the exterior component, such as the bodyshell 18, into a vehicle 103 into which the interior component is assembled. The second assembly step Pr3b is executed at a second assembly place PL3b. In the present embodiment, the manufacturing place PL1, the first assembly place PL3a, the second assembly place PL3b, and the inspection place PL5 exist in the same building. The storage place PL7 exists in a building different from the building in which the manufacturing place PL1, the first assembly place PL3a, the second assembly place PL3b, and the inspection place PL5 exist. Therefore, the inspection place PL5 and the storage place PL7 are connected via a course Ro4. The transport step Pr8 is a step of causing the vehicle 10 to move from the inspection place PL5 to the storage place PL7. Also in the present embodiment, the vehicle 10 is remotely controlled by the remote control device 7 to travel by the unmanned driving in at least a part of the sections from the manufacturing place PL1 to the storage place PL7.

The appearance of the vehicle 10 is different among the platform vehicle 10p, the vehicle in the middle of assembly 10n, and the assembled vehicle 10m due to the difference in the appearance shape of the vehicle 10. The vehicle in the middle of assembly 10n is the vehicle 10 in which at least the seat 19 is assembled into the platform vehicle 10p. In the present embodiment, the vehicle 10 after the first assembly step Pr3a is started and before the second assembly step Pr3b is started is the vehicle in the middle of assembly 10n. The vehicle 10 after the second assembly step Pr3b is started is the assembled vehicle 10m.

In the present embodiment, the vehicle 10 is classified into three states St1 to St3 including the first state St1, the second state St2, and a third state St3, depending on whether or not the seat 19 is assembled and whether or not the bodyshell 18 is assembled. In the present embodiment, the first state St1 refers to a case where the states St1 to St3 of the vehicle 10 are the platform state Sp. The second state St2 refers to a case where the states St1 to St3 of the vehicle 10 are the assembled state Sm. The third state St3 refers to a case where the state St1 to St3 of the vehicle 10 are a state in the middle of assembly Sn.

Hereinafter, the vehicle 103 classified into the third state St3 will be referred to as "third vehicle 103". In the present embodiment, the first vehicle 101 is the platform vehicle 10p. The second vehicle 102 is the assembled vehicle 10m. The third vehicle 103 is the vehicle in the middle of assembly 10n. In a case where there is no need to distinguish the vehicles 101 to 103 in the states St1 to St3, the vehicles 101 to 103 will be simply referred to as "vehicle 10".

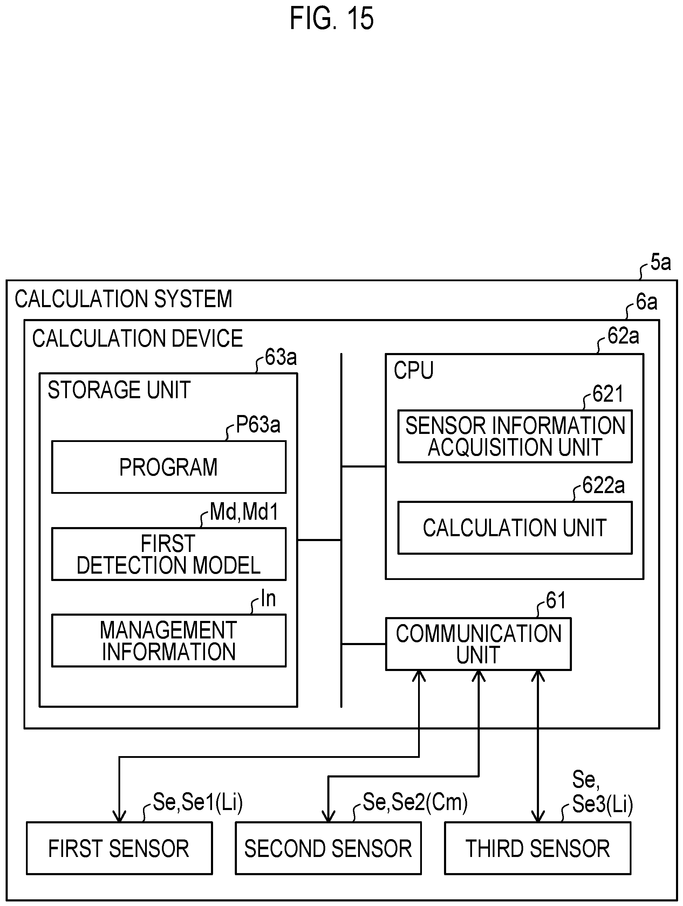

FIG. 15 is a diagram illustrating a configuration of a calculation system 5a in the second embodiment. The calculation system 5a includes the first sensor Se1, the second sensor Se2, a third sensor Se3, and a calculation device 6a. In the present embodiment, the first sensor Se1 and the third sensor Se3 are the LiDARs Li as the external sensors Se. The second sensor Se2 is the camera Cm as the external sensor Se.

As illustrated in FIG. 14, the first sensor Se1 is installed in a first area Ar12 in the factory Fc2. In the present embodiment, the first area Ar12 includes the manufacturing place PL1. The second sensor Se2 is installed in a second area Ar22 in the factory Fc2. In the present embodiment, the second area Ar22 includes the second assembly place PL3b, the inspection place PL5, the course Ro4, and the storage place PL7. The third sensor Se3 is installed in a third area Ar31 in the factory Fc2. In the present embodiment, the third area Ar31 includes the first assembly place PL3a.

Therefore, the LiDAR Li1 as the first sensor Se1 detects the platform vehicle 10p from the outside, to output the measurement point group data representing the appearance shape of the platform vehicle 10p as the first sensor information. Cameras Cm1 to Cm4 as the second sensors Se2 image the assembled vehicle 10m from the outside, to output the original image Im1 including the assembled vehicle 10m as the second sensor information. The LiDAR Li2 as the third sensor Se3 detects the vehicle in the middle of assembly 10n from the outside, to output the measurement point group data three-dimensionally representing the appearance shape of the vehicle in the middle of assembly 10n as the third sensor information.

The calculation device 6a illustrated in FIG. 15 calculates at least one of the position and the orientation of the vehicle 10 by using the sensor information output from the external sensors Se installed in the factory Fc2. The calculation device 6a includes the communication unit 61, a storage unit 63a, and a CPU 62a. In addition, the same configurations as the configurations in the first embodiment are denoted by the same reference numerals, and the description thereof will be omitted.

The storage unit 63a of the calculation device 6a stores various kinds of information including various programs P63a for controlling an operation of the calculation device 6a, the management information In, and the first detection model Md1.

The CPU 62a of the calculation device 6a functions as the sensor information acquisition unit 621 and a calculation unit 622a by loading the various programs P63a stored in the storage unit 63a. In a case where the sensor information acquisition unit 621 acquires the measurement point group data from the LiDARs Li1, Li2, the calculation unit 622a executes the matching between the measurement point group data and the point group data for reference, to calculate the position and the orientation of the platform vehicle 10p and the vehicle in the middle of assembly 10n. In a case where the sensor information acquisition unit 621 acquires the original image Im1, the calculation unit 622a inputs the captured images Im1 to Im4 to the first detection model Md1. As a result, the calculation unit 622a acquires the shape data Da and calculates the position and the orientation of the assembled vehicle 10m represented by the captured images Im1 to Im4.

According to the second embodiment, in the factory Fc2, the LiDAR Li that outputs the measurement point group data for calculating the position or the like of the vehicle 10 without executing the learning processing as the preprocessing is installed in the two areas Ar22, Ar31 among the three areas Ar12 to Ar31. As a result, for the first vehicle 101 and the third vehicle 103, the position or the like of the vehicles 101, 103 can be calculated without using the detection model Md trained by executing the learning processing. As described above, in a case where the vehicle 10 is classified into the three or more states St1 to St3 depending on the appearance of the vehicle 10, the position or the like of the vehicle 10 can be calculated without using the detection model Md for at least a part of the three or more states St1 to St3. Therefore, even in a case where the vehicle 10 is classified into the three or more states St1 to St3, the load needed for the learning processing can be reduced.

C. Third Embodiment

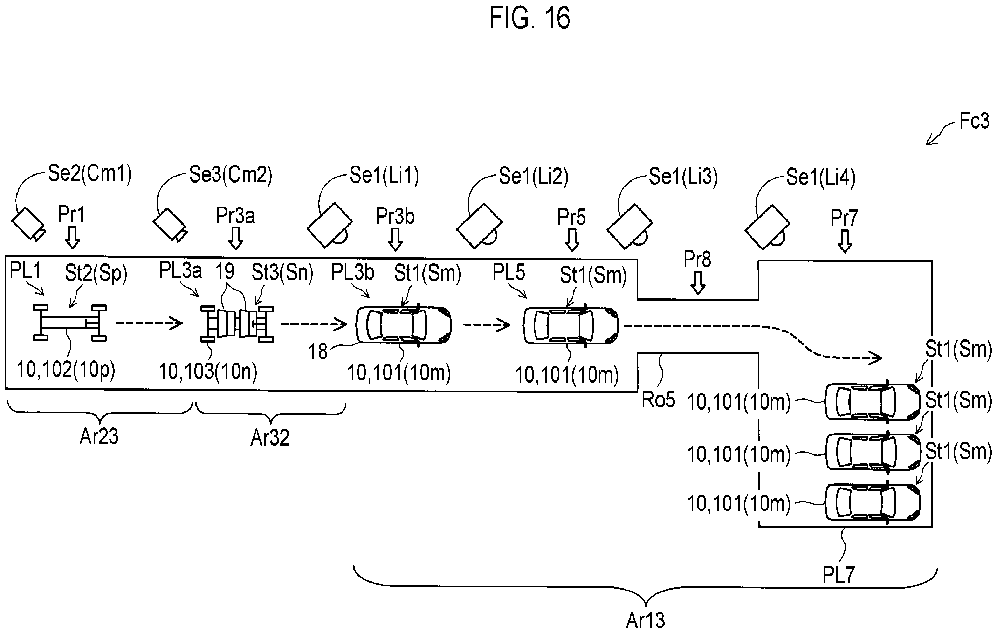

FIG. 16 is a diagram illustrating a state where the vehicle 10 travels in a factory Fc3 in a third embodiment. In the present embodiment, the same manufacturing steps Pr1 to Pr8 as the manufacturing steps Pr1 to Pr8 in the second embodiment are executed in the same order. Therefore, as in the second embodiment, the vehicle 10 is classified into the three states St1 to St3 including the first state St1, the second state St2, and the third state St3, depending on whether or not the seat 19 is assembled and whether or not the bodyshell 18 is assembled. In the present embodiment, the first state St1 refers to a case where the states St1 to St3 of the vehicle 10 are the assembled state Sm. The second state St2 refers to a case where the states St1 to St3 of the vehicle 10 are the platform state Sp. The third state St3 refers to a case where the states St1 to St3 of the vehicle 10 are the state in the middle of assembly Sn. Also in the present embodiment, the vehicle 10 is remotely controlled by the remote control device 7 to travel by the unmanned driving in at least a part of the sections from the manufacturing place PL1 to the storage place PL7. The same configurations as the configurations in each of the above-described embodiments are denoted by the same reference numerals, and the description thereof will be omitted.

In the present embodiment, the manufacturing place PL1, the first assembly place PL3a, the second assembly place PL3b, and the inspection place PL5 exist indoors. The inspection place PL5 and the storage place PL7 are connected via a course Ro5. The course Ro5 and the storage place PL7 exist outdoors.

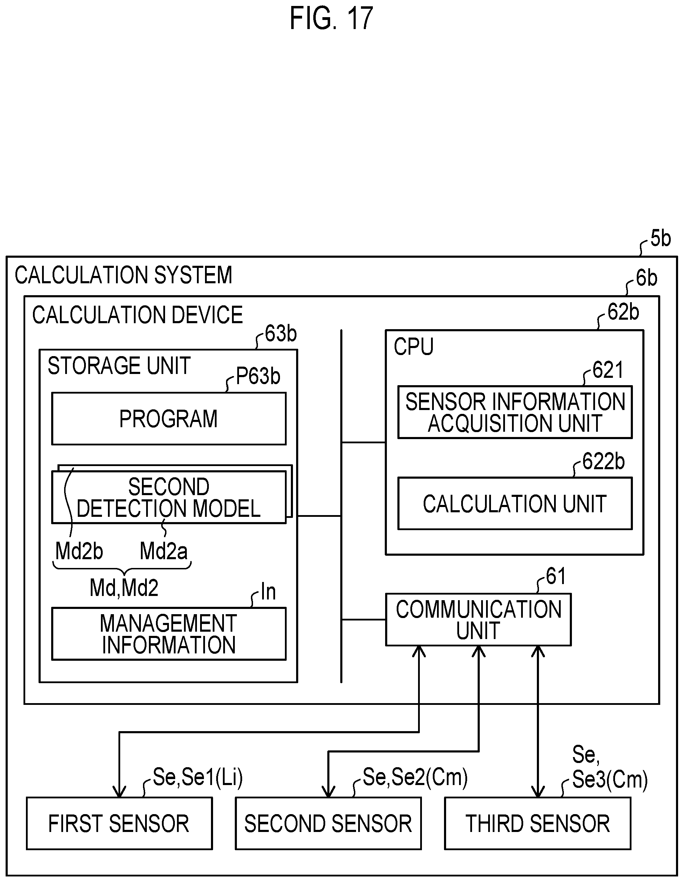

FIG. 17 is a diagram illustrating a configuration of a calculation system 5b in the third embodiment. The calculation system 5b includes the first sensor Se1, the second sensor Se2, the third sensor Se3, and a calculation device 6b. In the present embodiment, the first sensor Se1 is the LiDAR Li as the external sensor Se. The second sensor Se2 and the third sensor Se3 are the cameras Cm as the external sensors Se.

As illustrated in FIG. 16, the first sensor Se1 is installed in a first area Ar13 in the factory Fc3. In the present embodiment, the first area Ar13 includes the second assembly place PL3b, the inspection place PL5, the course Ro5, and the storage place PL7. The second sensor Se2 is installed in a second area Ar23 in the factory Fc3. In the present embodiment, the second area Ar23 includes the manufacturing place PL1. The third sensor Se3 is installed in a third area Ar32 in the factory Fc3. The third area Ar32 is an area in which the third vehicle 103 travels. In the present embodiment, the third area Ar32 includes the first assembly place PL3a.

Therefore, LiDARs Li1 to Li4 as the first sensors Se1 detects the assembled vehicle 10m from the outside, to output the measurement point group data three-dimensionally representing the appearance shape of the assembled vehicle 10m as the first sensor information. The camera Cm1 as the second sensor Se2 detects the platform vehicle 10p from the outside, to output the original image Im1 including the platform vehicle 10p as the second sensor information. The camera Cm2 as the third sensor Se3 detects the vehicle in the middle of assembly $10\eta$ from the outside, to output the original image Im1 including the vehicle in the middle of assembly 10n as the third sensor information.

The calculation device 6b illustrated in FIG. 17 calculates at least one of the position and the orientation of the vehicle 10 by using the sensor information output from the external sensors Se installed in the factory Fc3. The calculation device 6b includes the communication unit 61, a storage unit 63b, and a CPU 62b.

The storage unit 63b of the calculation device 6b stores various kinds of information including various programs P63b for controlling an operation of the calculation device 6b, the management information In, and a plurality of second detection models Md2 prepared respectively for the states St2, St3 of the vehicle 10 as the detection models Md. The second detection model Md2 detects the vehicle 10 from the captured images Im1 to Im4 to output the shape data Da when the captured images Im1 to Im4 are input.

Each of the second detection models Md2 is trained in advance through supervised learning by using a second data set for learning prepared for each of the states St2, St3 of the vehicle 10 and corresponding to the states St2, St3 of the vehicle 10. The second data set for learning includes a plurality of training images including the vehicle 10 and a region correct answer label. The second data set for learning includes M (M is an integer of two or more) first training images and N (N is an integer of zero or more and less than M) second training images, as the training images. The first training image is an image including the vehicle 10 classified into one state. The second training image is an image including the vehicle 10 classified into remaining other states other than the one state among the states St1 to St3 of the vehicle 10. The number M of the first training images included in the second data set for learning may be, for example, 1.5 times or more or 2 times or more the number N of the second training images. In a case where a plurality of other states different from the one state exists, the number M of the first training images included in the second data set for learning is, for example, larger than the total number of the second training images including the vehicles 10 classified into the remaining other states other than the one state. That is, the second detection model Md2 is a machine learning model that preferentially learns the feature value of the vehicle 10 classified into the one state by learning the first training image more than the second training image.

As illustrated in FIG. 16, in the present embodiment, the platform vehicle 10p and the vehicle in the middle of assembly $10\eta$ are detected from the captured images Im1 to Im4, to calculate the position and the orientation of the platform vehicle 10p and the vehicle in the middle of assembly 10n. Therefore, as illustrated in FIG. 17, the storage unit 63b of the calculation device 6b stores various kinds of information including two second detection models Md2. A first second detection model Md2a is the second detection model Md2 that learns the first training image including the platform vehicle 10p more than the second training image including any one of the vehicle in the middle of assembly $10\eta$ and the assembled vehicle 10m. The first second detection model Md2a is used to detect the platform vehicle 10p from the captured images Im1 to Im4. A second detection model Md2b is the second detection model Md2 that learns the first training image including the vehicle in the middle of assembly 10n more than the second training image including any one of the platform vehicle 10p and the assembled vehicle 10m. The second detection model Md2b is used to detect the vehicle in the middle of assembly 10n from the captured images Im1 to Im4.

The CPU 62b of the calculation device 6b functions as the sensor information acquisition unit 621 and a calculation unit 622b by loading the various programs P63b stored in the storage unit 63b. In a case where the sensor information acquisition unit 621 acquires the measurement point group data from the LiDARs Li1 to Li4, the calculation unit 622b executes the matching between the measurement point group data and the point group data for reference, to calculate the position and the orientation of the assembled vehicle 10m. In a case where the sensor information acquisition unit 621 acquires the original image Im1, the calculation unit 622b executes the following processing. In this case, the calculation unit 622b inputs the captured images Im1 to Im4 to the second detection models Md2a, Md2b selected depending on the states St2, St3 of the vehicle 10 from the two second detection models Md2a, Md2b prepared respectively for the states St2, St3 of the vehicle 10. Specifically, in a case where the sensor information acquisition unit 621 acquires the original image Im1 from the camera Cm1 installed in the second area Ar23, the calculation unit 622b inputs the captured images Im1 to Im4 to the second detection model Md2a corresponding to the platform state Sp. In a case where the sensor information acquisition unit 621 acquires the original image Im1 from the camera Cm2 installed in the third area Ar32, the calculation unit 622b inputs the captured images Im1 to Im4 to the second detection model Md2b corresponding to the state in the middle of assembly Sn. As a result, the calculation unit 622b acquires the shape data Da and calculates the position and the orientation of the platform vehicle 10p and the vehicle in the middle of assembly $10_\eta$ represented by the captured images Im1 to Im4.

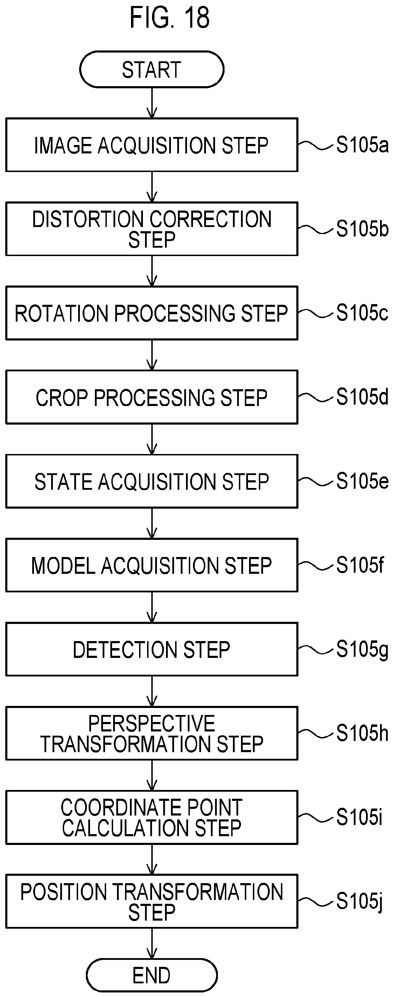

FIG. 18 is a flowchart illustrating the position calculation method of the vehicle 10 using the second detection model Md2. The same steps as the steps in the calculation method illustrated in FIG. 8 are denoted by the same step numbers, and the description thereof will be omitted.

In a state acquisition step of step S105e, the calculation unit 622b acquires state information. The state information is information indicating which of the states St1 to St3 the state of the vehicle 10 is. In addition, the state acquisition step may be executed at any point in time after the image acquisition step ends and before the detection step is started.

In a model acquisition step of step S105f, the calculation unit 622b selects and acquires the second detection models Md2a, Md2b corresponding to the states St2, St3 of the vehicle 10 specified by using the state information from among the two second detection models Md2a, Md2b stored in advance in the storage unit 63b of the calculation device 6b. In addition, the model acquisition step may be executed at any point in time after the state acquisition step ends and before the detection step is started.

According to the third embodiment, the second detection model Md2 suitable for detecting the vehicle 10 classified into the one state is prepared in advance by learning the first training image including the vehicle 10 classified into the one state more than the second training image including the vehicle 10 classified into the remaining other states. As a result, the calculation device 6b can acquire the state information and select the second detection model Md2 corresponding to the state specified by using the acquired state information from among the second detection models Md2 prepared for each state. The calculation device 6b can accurately detect the vehicles 102, 103 from the captured images Im1 to Im4 by inputting the captured images Im1 to Im4 to the second detection model Md2 corresponding to the states St2, St3 of the vehicles 102, 103 included in the captured images Im1 to Im4. Therefore, the detection accuracy when the vehicles 102, 103 are detected from the captured images Im1 to Im4 can be improved.

Here, when the vehicle 10 is imaged by using the camera Cm, imaging conditions may be changed due to an external environment at the time of the imaging. For example, a difference due to weather, such as sunshine or rain, or a difference due to a time zone, such as day or night, may cause a difference in an irradiation state of sunlight in the detection range RG2 of the camera Cm, and thus the brightness of the captured images Im1 to Im4 may be changed. As described above, in a case where the imaging conditions are changed due to the external environment at the time of the imaging, there is a possibility that the detection accuracy when the vehicle 10 is detected from the captured images Im1 to Im4 is decreased. On the other hand, the detection of the vehicle 10 by using the LiDAR Li is less likely to be affected by a disturbance corresponding to the external environment, such as sunlight. Therefore, in the third embodiment, the camera Cm is installed in the second area Ar23 and the third area Ar32 existing indoors, and the LiDAR Li is installed in the first area Ar 13 a part of which exists outdoors. In this way, the decrease in the detection accuracy when the vehicle 10 is detected from the sensor information can be suppressed.

D. Fourth Embodiment

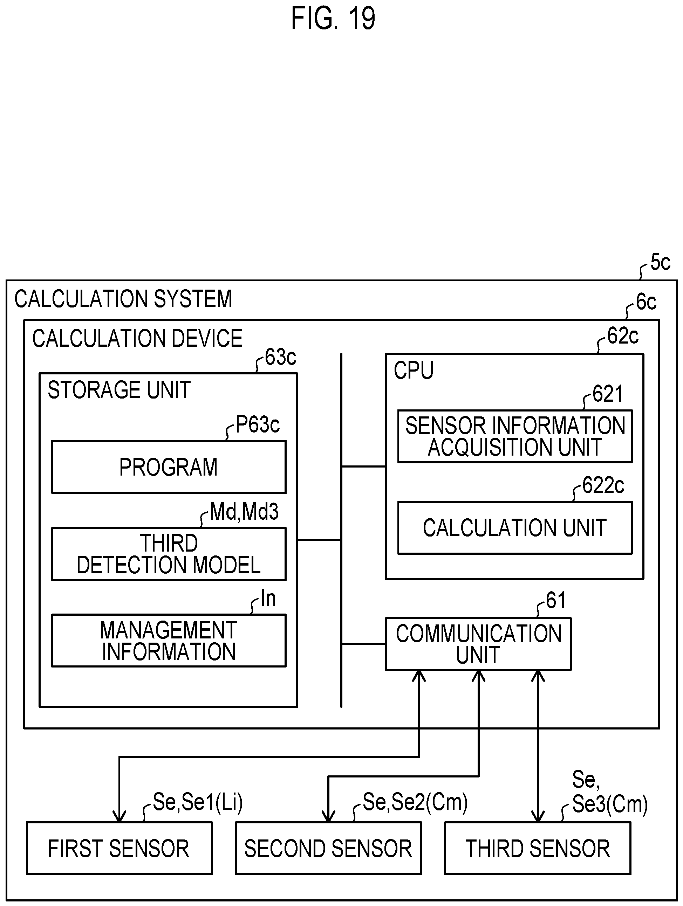

FIG. 19 is a diagram illustrating a configuration of a calculation system 5c in a fourth embodiment. In the present embodiment, the kind of the detection model Md is different from the kind in each of the above-described embodiments. The configuration of the factory Fc3 is the same as the configuration in the third embodiment illustrated in FIG. 16. Therefore, as in the third embodiment, the vehicle 10 is classified into the three states St1 to St3 including the first state St1, the second state St2, and the third state St3, depending on whether or not the seat 19 is assembled and whether or not the bodyshell 18 is assembled. In the present embodiment, the first state St1 refers to a case where the states St1 to St3 of the vehicle 10 are the assembled state Sm. The second state St2 refers to a case where the states St1 to St3 of the vehicle 10 are the platform state Sp. The third state St3 refers to a case where the states St1 to St3 of the vehicle 10 are the state in the middle of assembly Sn. Also in the present embodiment, the vehicle 10 is remotely controlled by the remote control device 7 to travel by the unmanned driving in at least a part of the sections from the manufacturing place PL1 to the storage place PL7. The same configurations as the configurations in each of the above-described embodiments are denoted by the same reference numerals, and the description thereof will be omitted.

As illustrated in FIG. 19, the calculation system 5c includes the first sensor Se1, the second sensor Se2, the third sensor Se3, and a calculation device 6c. As in the third embodiment, in the present embodiment, the first sensor Se1 is the LiDAR Li as the external sensor Se. The second sensor Se2 and the third sensor Se3 are the cameras Cm as the external sensors Se.

The calculation device 6c calculates at least one of the position and the orientation of the vehicle 10 by using the sensor information output from the external sensors Se installed in the factory Fc3. The calculation device 6c includes the communication unit 61, a storage unit 63c, and a CPU 62c.

The storage unit 63c of the calculation device 6c stores various kinds of information including various programs P63c for controlling an operation of the calculation device 6c, management information In, and a third detection model Md3 as the detection model Md. The third detection model Md3 detects the vehicle 10 from the captured images Im1 to Im4 to output the shape data Da when the captured images Im1 to Im4, and the states St2, St3 of the vehicle 10 included in the captured images Im1 to Im4 are input. The third detection model Md3 is trained in advance through supervised learning using a third data set for learning. The third data set for learning includes a plurality of training images including the vehicle 10, a region correct answer label, and a state correct answer label. The state correct answer labels are correct answer labels indicating the states St1 to St3 of the vehicle 10 included in the training image. The state correct answer label is associated with each of the training images.

The CPU 62c of the calculation device 6c functions as the sensor information acquisition unit 621 and a calculation unit 622c by loading the various programs P63c stored in the storage unit 63c. In a case where the sensor information acquisition unit 621 acquires the measurement point group data from the LiDARs Li1 to Li4, the calculation unit 622c executes the matching between the measurement point group data and the point group data for reference, to calculate the position and the orientation of the assembled vehicle 10m. In a case where the sensor information acquisition unit 621 acquires the original image Im1, the calculation unit 622 inputs the captured images Im1 to Im4 and the states St2, St3 of the vehicle 10 included in the captured images Im1 to Im4 to the third detection model Md3. Specifically, in a case where the sensor information acquisition unit 621 acquires the original image Im1 from the camera Cm1 installed in the second area Ar23, the calculation unit 622c inputs the captured images Im1 to Im4 and information indicating the platform state Sp to the third detection model Md3. In a case where the sensor information acquisition unit 621 acquires the original image Im1 from the camera Cm2 installed in the third area Ar32, the calculation unit 622c inputs the captured images Im1 to Im4 and information indicating the state in the middle of assembly Sn to the third detection model Md3. As a result, the calculation unit 622c acquires the shape data Da and calculates the position and the orientation of the platform vehicle 10p and the vehicle in the middle of assembly 10n represented by the captured images Im1 to Im4.

According to the fourth embodiment, the third detection model Md3 trained by associating the training images including the vehicle 10 with the state correct answer label indicating the state of the vehicle 10 included in each training image is prepared in advance. As a result, the vehicles 102, 103 can be accurately detected from the captured images Im1 to Im4 by inputting the captured images Im1 to Im4 associated with the states St2, St3 of the vehicle 10 to the third detection model Md3. Therefore, the detection accuracy when the vehicles 102, 103 are detected from the captured images Im1 to Im4 can be improved.

E. Fifth Embodiment

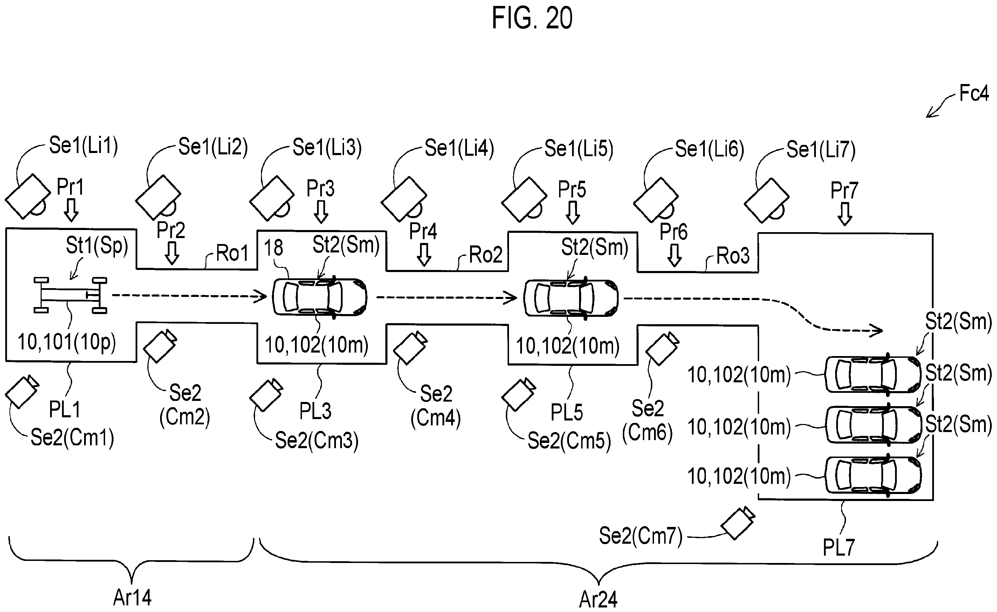

FIG. 20 is a diagram illustrating a state where the vehicle 10 travels in a factory Fc4 in a fifth embodiment. In the present embodiment, the same manufacturing steps Pr1 to Pr7 as the manufacturing steps Pr1 to Pr7 in the first embodiment are executed in the same order. Therefore, as in the first embodiment, the vehicle 10 is classified into the two states St1, St2 including the first state St1 and the second state St2, depending on whether or not the bodyshell 18 is assembled. In the present embodiment, the first state St1 refers to a case where the states St1, St2 of the vehicle 10 are the platform state Sp. The second state St2 refers to a case where the states St1, St2 of the vehicle 10 are the assembled state Sm. Also in the present embodiment, the vehicle 10 is remotely controlled by the remote control device 7 to travel by the unmanned driving in at least a part of the sections from the manufacturing place PL1 to the storage place PL7. The same configurations as the configurations in each of the above-described embodiments are denoted by the same reference numerals, and the description thereof will be omitted.

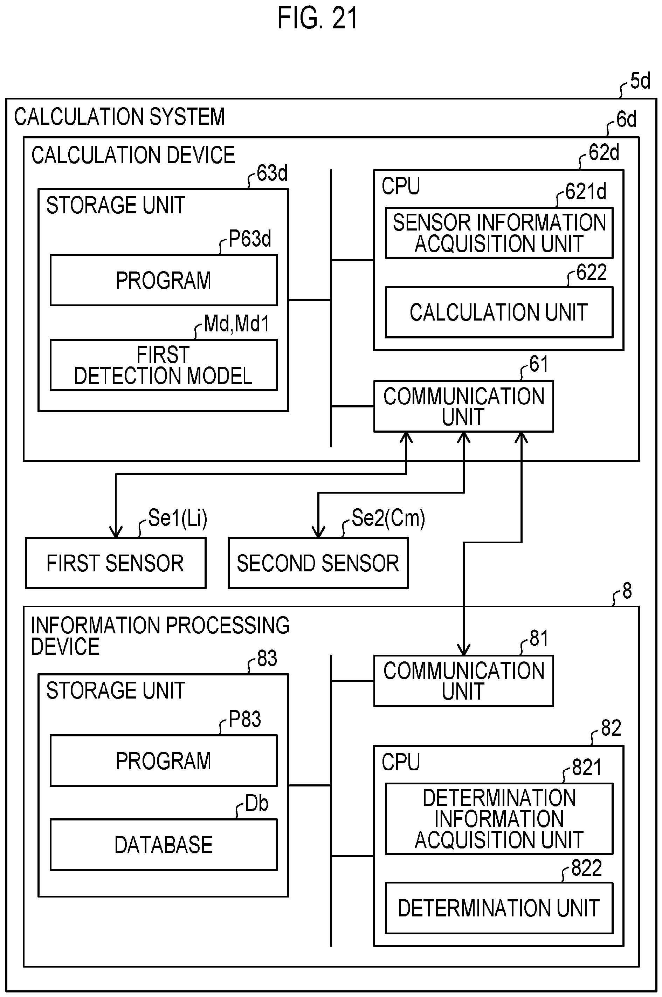

FIG. 21 is a diagram illustrating a configuration of a calculation system 5d in the fifth embodiment. The calculation system 5d includes the first sensor Se1, the second sensor Se2, an information processing device 8, and a calculation device 6d. In the present embodiment, the first sensor Se1 is the LiDAR Li as the external sensor Se. The second sensor Se2 is the camera Cm as the external sensor Se.

As illustrated in FIG. 20, in the present embodiment, both the first sensor Se1 and the second sensor Se2 are installed in each of areas Ar14, Ar24 in the factory Fc4. In the present embodiment, the first area Ar14 includes the manufacturing place PL1 and the first course Ro1. The second area Ar24 includes the assembly place PL3, the second course Ro2, the inspection place PL5, the third course Ro3, and the storage place PL7.

The information processing device 8 illustrated in FIG. 21 determines the kinds of the external sensors Se that detect the vehicle 10 in order to calculate at least one of the position and the orientation of the vehicle 10 by using the sensor information output from kinds of the external sensors Se corresponding to the states St1, St2 of the vehicle 10. The information processing device 8 includes a communication unit 81, a storage unit 83, and a CPU 82.

The communication unit 81 of the information processing device 8 connects the information processing device 8 and another device other than the information processing device 8 to be communicable with each other. The communication unit 81 of the information processing device 8 is, for example, a wireless communication device.

The storage unit 83 of the information processing device 8 stores various kinds of information including various programs P83 for controlling an operation of the information processing device 8, and a database Db. The database Db is used to determine which kind of the external sensor Se among a plurality of kinds of the external sensors Se installed in each of the areas Ar14, Ar24 is used to detect the vehicle 10. In the database Db, at least one of the states St1, St2 of the vehicle 10 specified by using the state information, the manufacturing steps Pr1 to Pr7 specified by using step information, and the kinds of the external sensors Se used to detect the vehicle 10 are associated with each other. The step information is information indicating which of the manufacturing steps Pr1 to Pr7 the manufacturing step being executed on the vehicle 10 is. In the present embodiment, the database Db is used to determine which external sensor Se of the first sensor Se1 and the second sensor Se2 is used to detect the vehicle 10 in each of the first area Ar14 and the second area Ar24.

The CPU 82 of the information processing device 8 functions as a determination information acquisition unit 821 and a determination unit 822 by loading the various programs P83 stored in the storage unit 83. The determination information acquisition unit 821 acquires at least one of the state information and the step information. In the present embodiment, the determination information acquisition unit 821 acquires the step information. The determination unit 822 executes the following processing in order to calculate at least one of the position and the orientation of the vehicle 10 by using the sensor information output from kinds of the external sensors Se corresponding to the states St1, St2 of the vehicle 10. In this case, the determination unit 822 determines which kind of the external sensor Se among the kinds of the external sensors Se installed in each of the areas Ar14, Ar24 is used to detect the vehicle 10, by using at least one of the state information and the step information. In the present embodiment, the determination unit 822 determines which external sensor Se of the first sensor Se1 and the second sensor Se2 is used to detect the vehicle 10, by using the step information and the database Db. Then, the determination unit 822 transmits a determination result to the calculation device 6d. In addition, at least a part of the functions of the CPU 82 of the information processing device 8 may be implemented by a hardware circuit.

The calculation device 6d calculates at least one of the position and the orientation of the vehicle 10 by using the sensor information output from kinds of the external sensors Se specified by using the determination result of the information processing device 8. The calculation device 6d includes the communication unit 61, a storage unit 63d, and a CPU 62d.

The storage unit 63d of the calculation device 6d stores various kinds of information including various programs P63d for controlling an operation of the calculation device 6d, the first detection model Md1, and the management information In.

The CPU 62d of the calculation device 6d functions as a sensor information acquisition unit 621d and the calculation unit 622 by loading the various programs P63d stored in the storage unit 63d. In a case where the determination unit 822 of the information processing device 8 determines to use the first sensor Se1 to detect the vehicle 10, the sensor information acquisition unit 621d of the calculation device 6d acquires the first sensor information output from the first sensor Se1 that includes the vehicle 10 as the calculation target in the detection range RG1. In a case where the determination unit 822 of the information processing device 8 determines to use the second sensor Se2 to detect the vehicle 10, the sensor information acquisition unit 621d of the calculation device 6d acquires the second sensor information output from the second sensor Se2 that includes the vehicle 10 as the calculation target in the detection range RG2. In addition, in a case where the external sensors Se that include the vehicle 10 as the calculation target in the detection ranges RG1, RG2 are specified, the sensor information acquisition unit 621d may use the management information In, or may use at least one of the state information and the step information.

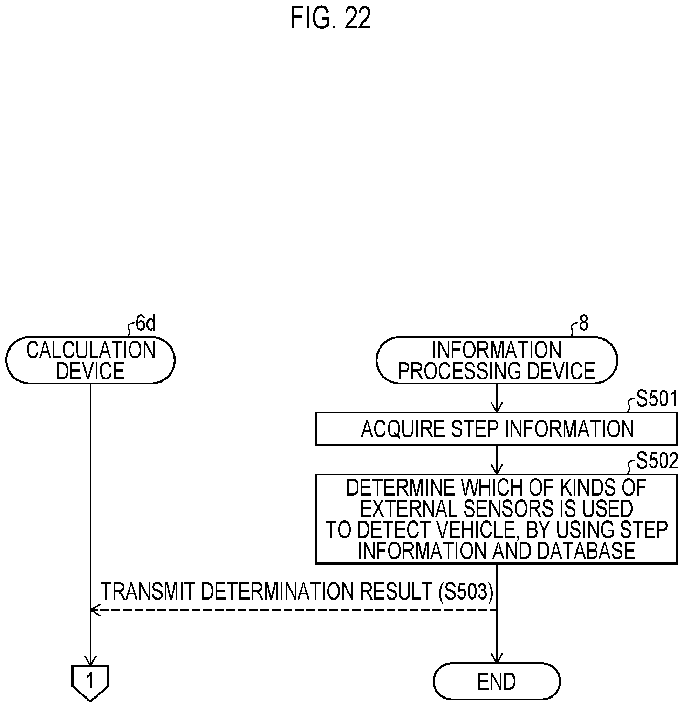

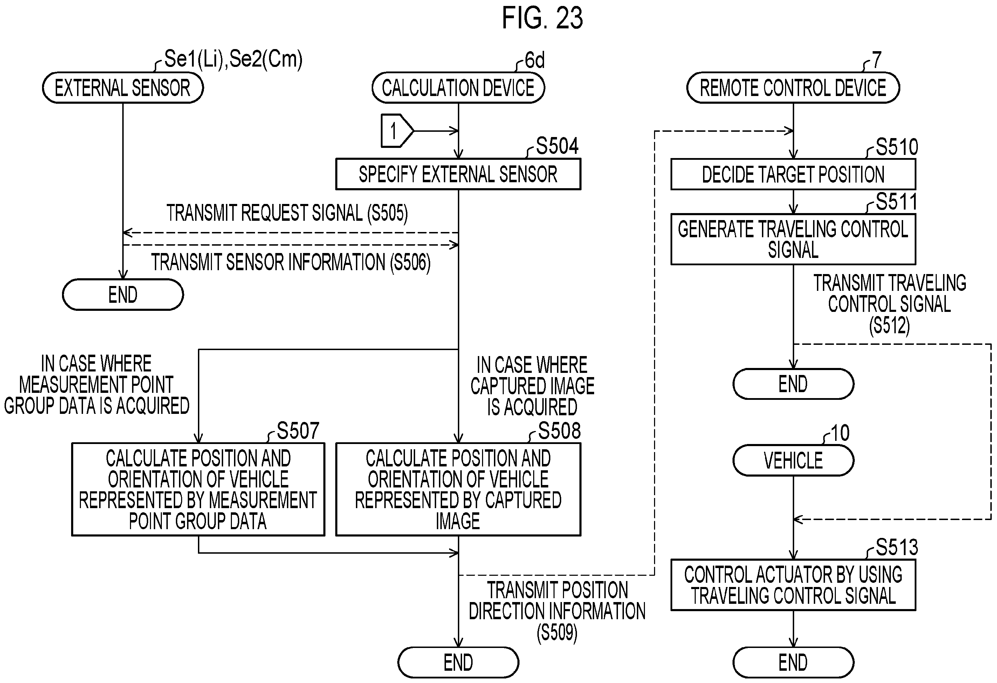

FIG. 22 is a first flowchart illustrating a processing flow in the fifth embodiment. FIG. 23 is a second flowchart illustrating the processing flow in the fifth embodiment. The processing flows illustrated in FIGS. 22 and 23 are repeatedly executed at predetermined time intervals, for example, from a point in time when the vehicle 10 starts traveling by the unmanned driving.

As illustrated in FIG. 22, in step S501, the determination information acquisition unit 821 of the information processing device 8 acquires the step information. In step S502, the determination unit 822 determines which external sensor Se of the first sensor Se1 and the second sensor Se2 is used to detect the vehicle 10, by using the step information and the database Db. In step S503, the determination unit 822 transmits the determination result to the calculation device 6d.

As illustrated in FIG. 23, in step S504, the sensor information acquisition unit 621d of the calculation device 6d specifies the external sensors Se that include the vehicle 10 as the calculation target in the detection range RG1, RG2 among kinds of the external sensors Se determined by the determination unit 822 of the information processing device 8. Steps S505 to S513 are the same as steps S102 to S110 illustrated in FIG. 6, respectively.

According to the fifth embodiment, the kinds of external sensors Se are installed in each of the areas Ar14, Ar24 in the factory Fc4. The information processing device 8 can determine which kind of the external sensor Se among the kinds of the external sensors Se is used to detect the vehicle 10, by using at least one of the state information and the step information, and transmit the determination result to the calculation device 6d. As a result, the calculation device 6d can calculate the position and the orientation of the vehicle 10 by using the sensor information output from kind of the external sensors Se determined by the information processing device 8. That is, the calculation system 5d can select kind of the external sensors Se corresponding to the states St1, St2 of the vehicle 10 and calculate the position and the orientation of the vehicle 10 by using the sensor information output from the selected external sensors Se.

F. Sixth Embodiment

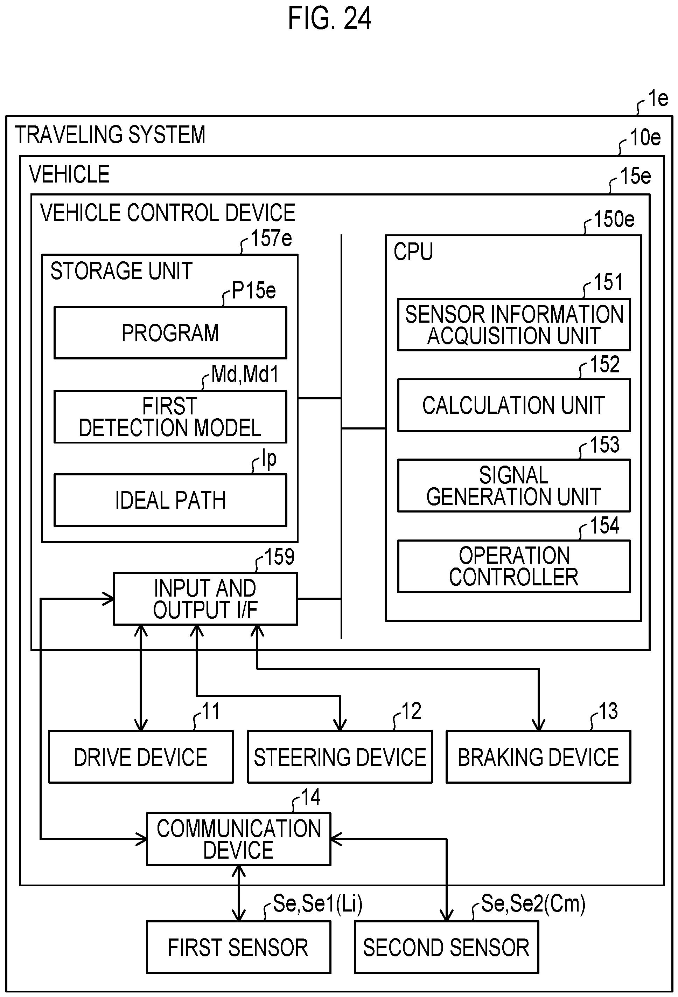

FIG. 24 is a diagram illustrating a configuration of a traveling system 1e in a sixth embodiment. In the present embodiment, the traveling system 1e includes one or more vehicles 10e on which a vehicle control device 15e having both the functions of the calculation device 6 and the remote control device 7 is mounted, and the first sensor Se1 and the second sensor Se2 as the external sensors Se. In the present embodiment, the vehicle control device 15e calculates a position and an orientation of the vehicle 10e, decides a target position to which the vehicle 10e should head next, and generates the traveling control signal for causing the vehicle 10e to travel toward the decided target position. Other configurations of the traveling system 1e are the same as the configurations in the first embodiment unless particularly described.

The vehicle control device 15e includes the input and output interface 159, a storage unit 157e, and a CPU 150e. The storage unit 157e of the vehicle control device 15e stores various kinds of information including various programs P15e for controlling an operation of the vehicle control device 15e, the first detection model Md1 as the detection model Md, and the ideal path Ip. The CPU 150e of the vehicle control device 15e functions as a sensor information acquisition unit 151, a calculation unit 152, a signal generation unit 153, and the operation controller 154 by loading the various programs stored in the storage unit 157e. The sensor information acquisition unit 151 acquires the sensor information output from the external sensors Se that include the vehicle 10e as the calculation target in the detection ranges RG1, RG2. The sensor information acquisition unit 151 of the vehicle control device 15e has the same function as the sensor information acquisition unit 621 of the calculation device 6 described in the first embodiment. The calculation unit 152 generates the position direction information by using the sensor information. The calculation unit 152 has the same function as the calculation unit 622 of the calculation device 6 described in the first embodiment. The signal generation unit 153 decides the target position to which the vehicle 10e should head next, by using the position direction information and the ideal path Ip. Then, the signal generation unit 153 generates the traveling control signal for causing the vehicle 10e to travel toward the decided target position. The signal generation unit 153 has the same function as the remote controller 721 of the remote control device 7 described in the first embodiment. The vehicle control device 15e repeatedly executes the acquisition of the position direction information of the vehicle 10e, the decision of the target position, the generation of the traveling control signal, and the control the actuator at a predetermined cycle.

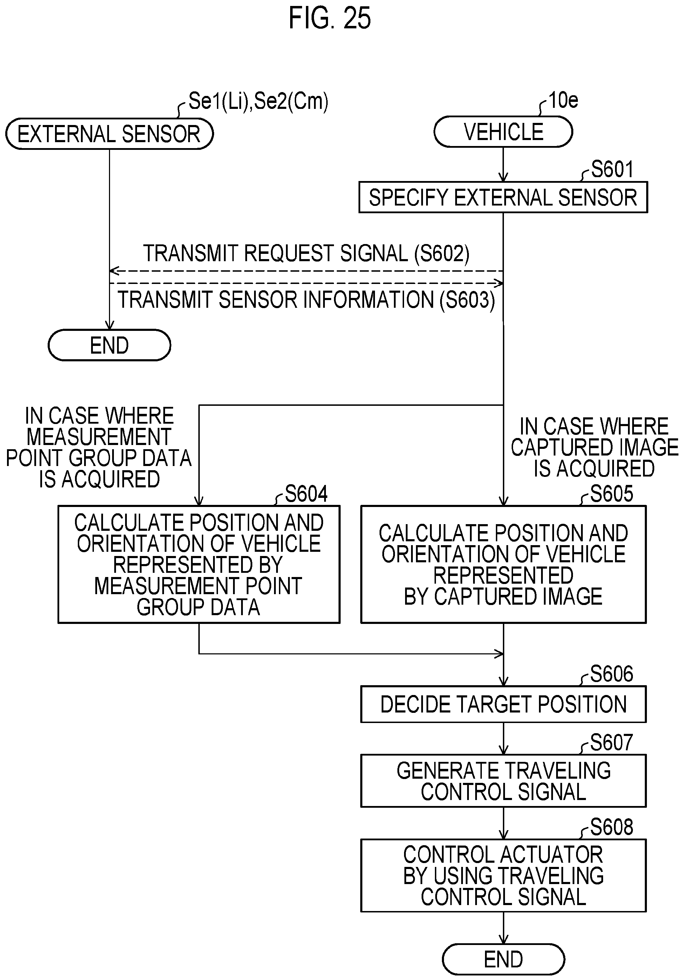

FIG. 25 is a flowchart illustrating a processing flow in the sixth embodiment. The processing flow illustrated in FIG. 25 is repeatedly executed at predetermined time intervals, for example, from a point in time when the vehicle 10e starts traveling by the unmanned driving.

In step S601, the sensor information acquisition unit 151 of the vehicle control device 15e mounted on the vehicle 10e specifies the external sensors Se that include the vehicle 10e as the calculation target in the detection ranges RG1, RG2 among the external sensors Se installed in the factory Fc1. In step S602, the sensor information acquisition unit 151 transmits a request signal for acquiring the sensor information to the specified external sensors Se. In step S603, the external sensors Se that receive the request signal transmit the sensor information to the vehicle 10e. In a case where the sensor information acquisition unit 621 of the vehicle control device 15e acquires the measurement point group data, in step S604, the calculation unit 152 calculates the position or the like of the vehicle 10e represented by the measurement point group data by using the measurement point group data, to generate the position direction information. In a case where the sensor information acquisition unit 621 acquires the original image Im1, in step S605, the calculation unit 152 calculates the position or the like of the vehicle 10e represented by the captured images Im1 to Im4 by using the first detection model Md1 trained by executing the learning processing, and the captured images Im1 to Im4, and generates the position direction information. In step S606, the signal generation unit 153 decides the target position to which the vehicle 10e should head next, by using the position direction information and the ideal path Ip. In step S607, the signal generation unit 153 generates the traveling control signal for causing the vehicle 10e to travel toward the decided target position. In step S608, the operation controller 154 controls the actuator by using the traveling control signal to cause the vehicle 10e to travel at the acceleration and the steering angle represented by the traveling control signal.

According to the sixth embodiment, the traveling system 1e can cause the vehicle 10e to travel by the autonomous control without the remote control on the vehicle 10e via the remote control device 7.

## G. Other Embodiments

### G-1. Other Embodiment 1

At least any one of the calculation device 6, 6a to 6d, the remote control device 7, and the information processing device 8 may be integrally configured. In addition, each unit of the calculation devices 6, 6a to 6d, the remote control device 7, and the information processing device 8 may be implemented by cloud computing configured by one or more computers. In addition, at least a part of the functions of the calculation devices 6, 6a to 6d, the remote control device 7, and the information processing device 8 may be a single function of the vehicle control devices 15, 15e, or may be a single function of the external sensors Se. In such a form, the configurations of the calculation devices 6, 6a to 6d, the remote control device 7, and the information processing device 8 can be changed as appropriate.

### G-2. Other Embodiment 2

The calculation units 152, 622, 622a to 622c may execute the preprocessing to calculate at least one of the position and the orientation of the vehicles 10, 10e represented by the measurement point group data by using the measurement point group data. That is, the first sensor Se1 that acquires the first sensor information may be the LiDAR Li. In addition, the calculation units 152, 622, 622a to 622c may calculate at least one of the position and the orientation of the vehicles 10, 10e represented by the captured images Im1 to Im4 by using the captured images Im1 to Im4 without executing the preprocessing. That is, the second sensor Se2 that acquires the second sensor information may be the camera Cm. In such a form, the kinds of the first sensor Se1 and the second sensor Se2 can be changed as appropriate in consideration of the states St1 to St3 classified depending on the appearances of the vehicles 10, 10e, the prices of the LiDAR Li and the camera Cm, the load needed for the preprocessing, and the like.

### G-3. Other Embodiment 3

The kinds of the first sensor Se1, the second sensor Se2, and the third sensor Se3 are not limited to the LiDAR Li and the visible light camera Cm. For example, any one of the first sensor Se1 and the second sensor Se2 may be a thermography camera as the external sensor Se. The thermography camera is a camera including an imaging element having sensitivity and an optical system that are sensitive to infrared rays. The thermography camera detects a surface temperature of an object existing in the detection range including the vehicle 10, to output a thermography image indicating a heat distribution in the detection range including the vehicle 10 as the sensor information. In such a form, the calculation units 152, 622, 622a to 622c can calculate at least one of the position and the orientation of the vehicles 10, 10e by using the sensor information output from the kinds of the external sensors Se other than the LiDAR Li and the visible light camera Cm. In a case where the first sensor Se1 is the thermography camera, the calculation units 152, 622, 622a to 622c executes matching between the thermography image and reference heat distribution data, to calculate the position or the like of the vehicles 10, 10e represented by the thermography image. The reference heat distribution data is, for example, three-dimensional CAD data of the vehicles 10, 10e. In such a form, the calculation units 152, 622, 622a to 622c can calculate at least one of the position and the orientation of the vehicles 10, 10e represented by the thermography image by using the thermography image without executing the preprocessing. In a case where the second sensor Se2 is the thermography camera, the calculation units 152, 622 execute, for example, the following processing. In this case, the calculation units 152, 622, 622a to 622c acquires the shape data Da by inputting the thermography image to the machine learning model that detects the appearance shapes of the vehicles 10, 10e from the thermography image to output the shape data Da when the thermography image is input. Then, the calculation units 152, 622 calculate the position or the like of the vehicles 10, 10e represented by the thermography image by transforming the image coordinate point P3 into the vehicle coordinate point Pv by using the shape data Da. In such a form, the calculation units 152, 622 can calculate at least one of the position and the orientation of the vehicles 10, 10e represented by the thermography image by using the machine learning model trained by executing the learning processing as the preprocessing, and the thermography image.

## G-4. Other Embodiment 4

The vehicles 10, 10e may be classified into a plurality of states depending on a difference in an appearance color of the vehicle 10 before and after the painting is executed. In such a form, the vehicles 10, 10e can be classified into the states depending on the appearance of the vehicles 10, 10e determined by at least one of the appearance shape and the appearance color of the vehicles 10, 10e.

## G-5. Other Embodiment 5

In each embodiment from the first embodiment to the fifth embodiment, the calculation devices 6, 6a to 6d and the remote control device 7 execute the processing from the acquisition of the position information of the vehicle 10 to the generation of the traveling control signal. Meanwhile, the vehicle 10 may execute at least a part of the processing from the acquisition of the position information of the vehicle 10 to the generation of the traveling control signal. For example, the following forms (1) to (3) may be used.

(1) The remote control device 7 may acquire the position information of the vehicle 10, decide the target position to which the vehicle 10 should head next, and generate a path from the current position of the vehicle 10 represented by the acquired position information to the target position. The remote control device 7 may generate a path to the target position between the current position and the destination, or may generate a path to the destination. The remote control device 7 may transmit the generated path to the vehicle 10. The vehicle 10 may generate a traveling control signal such that the vehicle 10 travels on the path received from the remote control device 7, and control the actuator by using the generated traveling control signal.

(2) The remote control device 7 may acquire the position information of the vehicle 10, and transmit the acquired position information to the vehicles 10, 10e. The vehicle 10 may decide the target position to which the vehicle 10 should head next, generate a path from the current position of the vehicle 10 represented by the received position information to the target position, generate a traveling control signal such that the vehicle 10 travels on the generated path, and control the actuator by using the generated traveling control signal.

(3) In the above-described forms (1) and (2), an internal sensor may be mounted on the vehicle 10, and a detection result output from the internal sensor may be used for at least one of the generation of the path and the generation of the traveling control signal. The internal sensor may include, for example, an in-vehicle camera, an in-vehicle LiDAR, a millimeter wave radar, an ultrasound sensor, a GPS sensor, an acceleration sensor, and a gyro sensor. For example, in the above-described form (1), the remote control device 7 may acquire the detection result of the internal sensor and reflect the detection result of the internal sensor to the path when the path is generated. In the above-described form (1), the vehicle 10 may acquire the detection result of the internal sensor and reflect the detection result of the internal sensor to the traveling control signal when the traveling control signal is generated. In the above-described form (2), the vehicle 10 may acquire the detection result of the internal sensor and reflect the detection result of the internal sensor to the path when the path is generated. In the above-described form (2), the vehicle 10 may acquire the detection result of the internal sensor and reflect the detection result of the internal sensor to the traveling control signal when the traveling control signal is generated.

(4) In the sixth embodiment, the internal sensor may be mounted on the vehicle 10e, and a detection result output from the internal sensor may be used in at least one of the generation of the path and the generation of the traveling control signal. For example, the vehicle 10e may acquire the detection result of the internal sensor and reflect the detection result of the internal sensor to the path when the path is generated. The vehicle 10e may acquire the detection result of the internal sensor and reflect the detection result of the internal sensor to the traveling control signal when the traveling control signal is generated.

(5) In the sixth embodiment, the vehicle 10e acquires the position information of the vehicle 10e by using the detection results of the external sensors Se. Meanwhile, the internal sensor may be mounted on the vehicle 10e, and the vehicle 10e may acquire the position information by using the detection result of the internal sensor, decide the target position to which the vehicle 10e should head next, generate the path from the current position of the vehicle 10e represented by the acquired position information to the target position, generate the traveling control signal for causing the vehicle 10e to travel on the generated path, and control the actuator by using the generated traveling control signal. In this case, the vehicle 10e can travel without using the detection results of the external sensors Se at all. In addition, the vehicle 10e may acquire a target arrival time or traffic jam information from the outside of the vehicle 10e and reflect the target arrival time or the traffic jam information to at least one of the path and the traveling control signal.

(6) In each embodiment from the first embodiment to the fifth embodiment, the remote control device 7 automatically generates the traveling control signal to be transmitted to the vehicle 10. Meanwhile, the remote control device 7 may generate the traveling control signal to be transmitted to the vehicle 10 in response to an operation of an operator who is located outside the vehicle 10. For example, the operator may operate an operation device including a display that displays an image output from the external sensors Se, a steering wheel, an accelerator pedal, a brake pedal for remotely operating the vehicle 10, and a communication device that communicates with the remote control device 7 via wired communication or wireless communication, and the remote control device 7 may generate the traveling control signal corresponding to the operation applied to the operation device.

G-6. Other Embodiment 6

In each of the above-described embodiments, the vehicles 10, 10e may have a configuration capable of moving by the unmanned driving, and may have a form of the platform having a configuration described below, for example. Specifically, the vehicles 10, 10e may include at least the vehicle control devices 15, 15e, the drive device 11, the steering device 12, and the braking device 13, in order to exhibit the three functions of "traveling", "turning", and "stopping" by the unmanned driving. In a case where the vehicles 10, 10e acquire the information from the outside for the unmanned driving, the vehicles 10, 10e may further include the vehicle communication device 14. That is, the vehicles 10, 10e that can move by the unmanned driving need not be equipped with at least a part of the interior components, such as a driver's seat and a dashboard, need not be equipped with at least a part of the exterior components, such as a bumper and a fender mirror, and need not be equipped with the bodyshell 18. In this case, the remaining components, such as the bodyshell 18, may be equipped on the vehicles 10, 10e while the vehicles 10, 10e are shipped from the factories Fc1 to Fc4, or the remaining components, such as the bodyshell 18, may be equipped on the vehicles 10, 10e after the vehicles 10, 10e are shipped from the factories Fc1 to Fc4 in a state where the remaining components, such as the bodyshell 18, are not equipped on the vehicles 10, 10e. Each component may be equipped from any direction, such as an upper side, a lower side, a front side, a rear side, a right side, or a left side of the vehicles 10, 10e, and may be equipped from the same direction or different directions. In addition, the position is decided for the vehicle 10p having a form of the platform in the same manner as the vehicle 10 in the first embodiment.

G-7. Other Embodiment 7

The vehicles 10, 10e may be manufactured by combining a plurality of modules. The module means a unit configured by a plurality of components assembled depending on the parts or the functions of the vehicles 10, 10e. For example, the platforms of the vehicles 10, 10e may be manufactured by combining a front module that constitutes a front portion of the platform, a center module that constitutes a center portion of the platform, and a rear module that constitutes a rear portion of the platform. In addition, the number of the modules constituting the platform is not limited to three, and may be two or less or four or more. In addition to or instead of the components constituting the platform, the components constituting the portions of the vehicles 10, 10e different from the platform may be modularized. In addition, various modules may include any exterior component, such as a bumper or a grille, or any interior component, such as the seat 19 or a console. In addition, in addition to the vehicles 10, 10e, a moving object of any aspect may be manufactured by combining the modules. Such a module may be manufactured, for example, by joining the components via welding, a fastener, or the like, or may be manufactured by integrally molding at least a part of the components constituting the module as one component by casting. A molding method of integrally molding one component, particularly a relatively large component, is also called giga casting or mega casting. For example, the front module, the center module, and the rear module may be manufactured by using giga casting.

G-8. Other Embodiment 8

The transport of the vehicles 10, 10e by using the traveling of the vehicles 10, 10e by the unmanned driving is also referred to as "autonomous transport". A configuration for implementing the autonomous transport is also referred to as "vehicle remote control autonomous driving transport system". A production method of producing the vehicles 10, 10e by using the autonomous transport is also referred to as "autonomous production". In the autonomous production, for example, at least a part of the transport of the vehicles 10, 10e is implemented by the autonomous transport in the factories Fc1 to Fc4 that manufacture the vehicles 10, 10e.

The present disclosure is not limited to the above-described embodiments, and can be implemented with various configurations without departing from the spirit of the present disclosure. For example, the technical features of the embodiments corresponding to the technical features in each form described in the section of SUMMARY OF THE INVENTION can be replaced or combined as appropriate to solve some or all of the above objects, or to achieve some of or all the above effects. In a case where the technical features are not described as essential in the present specification, the features can be deleted as appropriate.

**Claims**

1. A calculation device in which a moving object (10) is configured to move by unmanned driving in a factory in which a plurality of manufacturing steps is executed to manufacture the moving object (10), and the moving object (10) is classified into a plurality of states by having different appearances depending on the manufacturing steps, the calculation device comprising:

a sensor information acquisition unit (621) configured to acquire first sensor information that is output from a first sensor by detecting the moving object (10) classified into a first state (St1) among the states via the first sensor from an outside of the moving object (10) and that represents the moving object (10) classified into the first state (St1), and acquire second sensor information that is output from a second sensor of a different kind from the first sensor by detecting the moving object (10) classified into a second state (St2) different from the first state (St1) among the states via the second sensor from the outside and that represents the moving object (10) classified into the second state (St2); and
a calculation unit (6) configured to calculate at least one of a position and an orientation of the moving object (10) by using the first sensor information without executing preprocessing, and execute the preprocessing to calculate at least one of the position and the orientation of the moving object (10) by using the second sensor information.

2. The calculation device according to claim 1, wherein:

the first sensor is any one of a camera (Cm) and a light detection and ranging (Li); and
the second sensor is the other of the camera (Cm) and the light detection and ranging (Li).

3. A calculation system in which a moving object (10) is configured to move by unmanned driving in a factory in which a plurality of manufacturing steps is executed to manufacture the moving object (10), and the moving object (10) is classified into a plurality of states by having different appearances depending on the manufacturing steps, the calculation system comprising:

a first sensor configured to output first sensor information representing the moving object (10) classified into a first state (St1) among the states by detecting the moving object (10) classified into the first state (St1) from an outside of the moving object (10);
a second sensor configured to output second sensor information representing the moving object (10) classified into a second state (St2) different from the first state (St1) among the states by detecting the moving object (10) classified into the second state (St2) from the outside, the second sensor being a different kind from the first sensor; and
a calculation unit (6) configured to calculate at least one of a position and an orientation of the moving object (10) by using the first sensor information without executing preprocessing, and execute the preprocessing to calculate at least one of the position and the orientation of the moving object (10) by using the second sensor information.

4. The calculation system according to claim 3, further comprising:

a determination information acquisition unit configured to acquire at least one of state information indicating which of the states the state of the moving object (10) is, and step information indicating which of the manufacturing steps the manufacturing step being executed on the moving object (10) is; and
a determination unit configured to determine which of the first sensor and the second sensor is used to detect the moving object (10) by using at least one of the state information and the step information, for calculating at least one of the position and the orientation of the moving object (10),
wherein the calculation unit (6) is configured to calculate at least one of the position and the orientation of the moving object (10) by using the first sensor information without executing the preprocessing in a case where the determination unit determines that the moving object (10) is detected by using the first sensor, and execute the preprocessing to calculate at least one of the position and the orientation of the moving object (10) by using the second sensor information in a case where the determination unit determines that the moving object (10) is detected by using the second sensor.

5. The calculation system according to claim 3, further comprising:

a determination information acquisition unit configured to acquire at least one of state information indicating which of the states the state of the moving object (10) is, and step information indicating which of the manufacturing steps the manufacturing step being executed on the moving object (10) is; and
a determination unit configured to determine which of the first sensor and the second sensor is used to detect the moving object (10) by using at least one of the state information and the step information, for calculating at least one of the position and the orientation of the moving object (10),

wherein the calculation unit (6) is configured to calculate at least one of the position and the orientation of the moving object (10) by using the first sensor information or the second sensor information output from the first sensor or the second sensor determined by the determination unit to be used to detect the moving object (10).

6. The calculation system according to any one of claims 3 to 5, wherein:

the first sensor is one of a camera (Cm) and a light detection and ranging (Li); and
the second sensor is the other of the camera (Cm) and the light detection and ranging (Li).

7. The calculation system according to claim 6, wherein the calculation unit (6) is configured to

detect the moving object (10) from a captured image output from the camera (Cm) and output shape data indicating an appearance shape of the moving object (10),
calculate coordinates of a positioning point set in advance for the moving object (10) in an image coordinate system by using the shape data, and
calculate at least one of the position and the orientation of the moving object (10) represented by the captured image by transforming the calculated coordinates into coordinates in a global coordinate system.

8. The calculation system according to claim 6 or 7, wherein the calculation unit (6) is configured to execute matching between measurement point group data output from the light detection and ranging (Li) and point group data for reference prepared in advance, to calculate at least one of the position and the orientation of the moving object (10) represented by the measurement point group data.

9. The calculation system according to any one of claims 3 to 8, wherein the preprocessing includes learning processing of training a machine learning model.

10. The calculation system according to claim 9, wherein the calculation unit (6) is configured to

acquire shape data indicating an appearance shape of the moving object (10) by inputting the second sensor information to the machine learning model that is trained by executing the learning processing and is trained to output the shape data when the second sensor information is input, and
calculate at least one of the position and the orientation of the moving object (10) by using the shape data.

11. The calculation system according to claim 10, wherein:

the machine learning model is prepared for each of the states of the moving object (10);
a plurality of the machine learning models prepared respectively for the states is trained in advance to output the shape data, by inputting a plurality of training images including M first training images each including the moving object (10) classified into one state among the states and N second training images each including the moving object (10) classified into remaining other states, M being an integer of 2 or more, and N being an integer of 0 or more and less than M; and
the calculation unit (6) is configured to

acquire the shape data by inputting the second sensor information to the machine learning model selected depending on the state of the moving object (10) from among the machine learning models prepared respectively for the states,
calculate coordinates of a positioning point set in advance for the moving object (10) in an image coordinate system by using the shape data, and
calculate at least one of the position and the orientation of the moving object (10) represented by the second sensor information by transforming the calculated coordinates into coordinates in a global coordinate system.

12. The calculation system according to claim 10, wherein:

the machine learning model is trained in advance to output the shape data, by inputting a plurality of training images including the moving object (10) and a correct answer label that is associated with each of the training images and that indicates the state of the moving object (10) included in the training images; and
the calculation unit (6) is configured to

acquire the shape data by inputting the second sensor information and the state of the moving object (10) to the machine learning model,
calculate coordinates of a predetermined positioning point set in advance for the moving object (10) in an image coordinate system by using the shape data, and calculate at least one of the position and the orientation of the moving object (10) represented by the second sensor information by transforming the calculated coordinates into coordinates in a global coordinate system.

13. An information processing device that is used to cause a moving object (10) to move, in which the moving object (10) is configured to move by unmanned driving in a factory in which a plurality of manufacturing steps is executed to manufacture the moving object (10), and the moving object (10) is classified into a plurality of states by having different appearances depending on the manufacturing steps, the information processing device comprising:

a determination information acquisition unit configured to acquire at least one of state information indicating which of the states the state of the moving object (10) is, and step information indicating which of the manufacturing steps the manufacturing step being executed on the moving object (10) is; and
a determination unit configured to determine which of a first sensor and a second sensor of a different kind from the first sensor is used to detect the moving object (10) by using at least one of the state information and the step information, for calculating at least one of a position and an orientation of the moving object (10).

14. A calculation method of calculating at least one of a position and an orientation of a moving object (10), in which the moving object (10) is configured to move by unmanned driving in a factory in which a plurality of manufacturing steps is executed to manufacture the moving object (10), and the moving object (10) is classified into a plurality of states by having different appearances depending on the manufacturing steps, the calculation method comprising:

a sensor information acquisition step of acquiring first sensor information that is output from a first sensor by detecting the moving object (10) classified into a first state (St1) among the states via the first sensor from an outside of the moving object (10) and that represents the moving object (10) classified into the first state (St1), and acquiring second sensor information that is output from a second sensor of a different kind from the first sensor by detecting the moving object (10) classified into a second state (St2) different from the first state (St1) among the states via the second sensor from the outside and that represents the moving object (10) classified into the second state (St2); and
a calculation step of calculating at least one of the position and the orientation of the moving object (10) by using the first sensor information without executing preprocessing, and executing the preprocessing to calculate at least one of the position and the orientation of the moving object (10) by using the second sensor information.

15. The calculation method according to claim 14, wherein:

the first sensor information is information output from one of a camera (Cm) and a Light detection and ranging (Li) by detecting the moving object (10) classified into the first state (St1) via the one of the camera (Cm) and the Light detection and ranging (Li) from the outside; and
the second sensor information is information output from the other of the camera (Cm) and the Light detection and ranging (Li) by detecting the moving object (10) classified into the second state (St2) via the other one of the camera (Cm) and the Light detection and ranging (Li) from the outside.

FIG. 1

REMOTE CONTROL DEVICE 7

CALCULATION DEVICE 6

1

5 Se,Se2(Cm)

RG2

St2(Sm) 11,12,13

10,102(10m)

14
15

18

10f

Ar21

5 Se,Se1(Li)

RG1

18

St1(Sp)

10,101(10p)

11,12,13

14

15

10f

Ar11

28

# FIG. 2

VEHICLE CONTROL DEVICE — 15

CPU — 150

OPERATION CONTROLLER — 154

INPUT AND OUTPUT I/F — 159

STORAGE UNIT — 157

PROGRAM — P15

# FIG. 3

EP 4 524 885 A2

# FIG. 4

CALCULATION DEVICE ⌐6

STORAGE UNIT ⌐63

PROGRAM ⌐P63

FIRST DETECTION MODEL ⌐Md,Md1

MANAGEMENT INFORMATION ⌐In

COMMUNICATION UNIT ⌐61

CPU ⌐62

SENSOR INFORMATION ACQUISITION UNIT ⌐621

CALCULATION UNIT ⌐622

# FIG. 5

REMOTE CONTROL DEVICE ⌐7

STORAGE UNIT ⌐73

PROGRAM ⌐P73

IDEAL PATH ⌐Ip

COMMUNICATION UNIT ⌐71

CPU ⌐72

REMOTE CONTROLLER ⌐721

# FIG. 6

Se1(Li),Se2(Cm) / 6 / 7

( EXTERNAL SENSOR )　　( CALCULATION DEVICE )　　( REMOTE CONTROL DEVICE )

S101
SPECIFY EXTERNAL SENSOR

TRANSMIT REQUEST SIGNAL (S102)

TRANSMIT SENSOR INFORMATION (S103)

( END )

IN CASE WHERE
MEASUREMENT POINT
GROUP DATA IS ACQUIRED

IN CASE WHERE
CAPTURED IMAGE
IS ACQUIRED

S104
CALCULATE POSITION AND
ORIENTATION OF VEHICLE
REPRESENTED BY MEASUREMENT
POINT GROUP DATA

S105
CALCULATE POSITION AND
ORIENTATION OF VEHICLE
REPRESENTED BY CAPTURED
IMAGE

S107
DECIDE TARGET POSITION

S108
GENERATE TRAVELING CONTROL
SIGNAL

TRANSMIT TRAVELING
CONTROL SIGNAL
(S109)

( END )

10
( VEHICLE )

TRANSMIT POSITION
DIRECTION INFORMATION
(S106)

( END )

S110
CONTROL ACTUATOR BY USING
TRAVELING CONTROL SIGNAL

( END )

EP 4 524 885 A2

# FIG. 7

```
        ┌─────────────────┐
        │      START      │
        └─────────────────┘
                 │
                 ▼
   ┌─────────────────────────┐
   │  ACQUIRE MEASUREMENT     │──── S104a
   │  POINT GROUP DATA        │
   └─────────────────────────┘
                 │
                 ▼
   ┌─────────────────────────┐
   │   EXECUTE MATCHING       │
   │ TO CALCULATE POSITION    │
   │   AND ORIENTATION        │──── S104b
   │ OF PLATFORM VEHICLE      │
   └─────────────────────────┘
                 │
                 ▼
        ┌─────────────────┐
        │       END       │
        └─────────────────┘
```

# FIG. 8

START

↓

IMAGE ACQUISITION STEP — S105a

↓

DISTORTION CORRECTION STEP — S105b

↓

ROTATION PROCESSING STEP — S105c

↓

CROP PROCESSING STEP — S105d

↓

DETECTION STEP — S105g

↓

PERSPECTIVE TRANSFORMATION STEP — S105h

↓

COORDINATE POINT CALCULATION STEP — S105i

↓

POSITION TRANSFORMATION STEP — S105j

↓

END

# FIG. 9

STEP S105a

STEP S105b

STEP S105c

STEP S105d

STEP S105e

STEP S105f

EP 4 524 885 A2

FIG. 10

FIG. 11

Im5
Ms
R1
V
C
P0

Im5
Ms
R1
V
C
P0

Im5
V
Ms
R0
C

ROTATION

REVERSE ROTATION

# FIG. 12

# FIG. 13

FIG. 14

# FIG. 15

CALCULATION SYSTEM 5a

CALCULATION DEVICE 6a

STORAGE UNIT 63a

PROGRAM P63a

FIRST DETECTION MODEL Md,Md1

MANAGEMENT INFORMATION In

CPU 62a

SENSOR INFORMATION ACQUISITION UNIT 621

CALCULATION UNIT 622a

COMMUNICATION UNIT 61

FIRST SENSOR Se,Se1(Li)

SECOND SENSOR Se,Se2(Cm)

THIRD SENSOR Se, Se3(Li)

# FIG. 16

EP 4 524 885 A2

# FIG. 17

CALCULATION SYSTEM — 5b

CALCULATION DEVICE — 6b

CPU — 62b

STORAGE UNIT — 63b

PROGRAM — P63b

SECOND DETECTION MODEL

Md2b    Md2a

Md,Md2

MANAGEMENT INFORMATION — In

SENSOR INFORMATION ACQUISITION UNIT — 621

CALCULATION UNIT — 622b

COMMUNICATION UNIT — 61

FIRST SENSOR — Se,Se1(Li)

SECOND SENSOR — Se,Se2(Cm)

THIRD SENSOR — Se, Se3(Cm)

# FIG. 18

START

IMAGE ACQUISITION STEP — S105a

DISTORTION CORRECTION STEP — S105b

ROTATION PROCESSING STEP — S105c

CROP PROCESSING STEP — S105d

STATE ACQUISITION STEP — S105e

MODEL ACQUISITION STEP — S105f

DETECTION STEP — S105g

PERSPECTIVE TRANSFORMATION STEP — S105h

COORDINATE POINT CALCULATION STEP — S105i

POSITION TRANSFORMATION STEP — S105j

END

# FIG. 19

CALCULATION SYSTEM 5c

CALCULATION DEVICE 6c

STORAGE UNIT 63c

PROGRAM P63c

THIRD DETECTION MODEL Md,Md3

MANAGEMENT INFORMATION In

CPU 62c

SENSOR INFORMATION ACQUISITION UNIT 621

CALCULATION UNIT 622c

COMMUNICATION UNIT 61

FIRST SENSOR — Se,Se1(Li)

SECOND SENSOR — Se,Se2(Cm)

THIRD SENSOR — Se, Se3(Cm)

## FIG. 20

# FIG. 21

**CALCULATION SYSTEM** — 5d

**CALCULATION DEVICE** — 6d

**STORAGE UNIT** — 63d

**PROGRAM** — P63d

**FIRST DETECTION MODEL** — Md,Md1

**CPU** — 62d

**SENSOR INFORMATION ACQUISITION UNIT** — 621d

**CALCULATION UNIT** — 622

**COMMUNICATION UNIT** — 61

Se1(Li)

Se2(Cm)

**FIRST SENSOR**

**SECOND SENSOR**

**INFORMATION PROCESSING DEVICE** — 8

**STORAGE UNIT** — 83

**PROGRAM** — P83

**DATABASE** — Db

**COMMUNICATION UNIT** — 81

**CPU** — 82

**DETERMINATION INFORMATION ACQUISITION UNIT** — 821

**DETERMINATION UNIT** — 822

# FIG. 22

CALCULATION DEVICE ⌐6d

INFORMATION PROCESSING DEVICE ⌐8

ACQUIRE STEP INFORMATION ⌐S501

DETERMINE WHICH OF KINDS OF EXTERNAL SENSORS IS USED TO DETECT VEHICLE, BY USING STEP INFORMATION AND DATABASE ⌐S502

TRANSMIT DETERMINATION RESULT (S503)

1

END

# FIG. 23

**EXTERNAL SENSOR** — Se1(Li),Se2(Cm)

**CALCULATION DEVICE** — 6d

**REMOTE CONTROL DEVICE** — 7

1

S504 — SPECIFY EXTERNAL SENSOR

TRANSMIT REQUEST SIGNAL (S505)

TRANSMIT SENSOR INFORMATION (S506)

END

S510 — DECIDE TARGET POSITION

S511 — GENERATE TRAVELING CONTROL SIGNAL

TRANSMIT TRAVELING CONTROL SIGNAL (S512)

END

IN CASE WHERE MEASUREMENT POINT GROUP DATA IS ACQUIRED

IN CASE WHERE CAPTURED IMAGE IS ACQUIRED

S507 — CALCULATE POSITION AND ORIENTATION OF VEHICLE REPRESENTED BY MEASUREMENT POINT GROUP DATA

S508 — CALCULATE POSITION AND ORIENTATION OF VEHICLE REPRESENTED BY CAPTURED IMAGE

10 — VEHICLE

TRANSMIT POSITION DIRECTION INFORMATION (S509)

END

S513 — CONTROL ACTUATOR BY USING TRAVELING CONTROL SIGNAL

END

# FIG. 24

TRAVELING SYSTEM ⌐1e

VEHICLE ⌐10e

VEHICLE CONTROL DEVICE ⌐15e

STORAGE UNIT ⌐157e

PROGRAM ⌐P15e

FIRST DETECTION MODEL ⌐Md,Md1

IDEAL PATH ⌐Ip

INPUT AND OUTPUT I/F ⌐159

CPU ⌐150e

SENSOR INFORMATION ACQUISITION UNIT ⌐151

CALCULATION UNIT ⌐152

SIGNAL GENERATION UNIT ⌐153

OPERATION CONTROLLER ⌐154

DRIVE DEVICE ⌐11

STEERING DEVICE ⌐12

BRAKING DEVICE ⌐13

COMMUNICATION DEVICE ⌐14

Se,Se1(Li)

Se,Se2(Cm)

FIRST SENSOR

SECOND SENSOR

# FIG. 25

Se1(Li),Se2(Cm)

**EXTERNAL SENSOR**

10e

**VEHICLE**

S601
SPECIFY EXTERNAL SENSOR

TRANSMIT REQUEST SIGNAL (S602)

TRANSMIT SENSOR INFORMATION (S603)

**END**

IN CASE WHERE
MEASUREMENT
POINT GROUP DATA
IS ACQUIRED

IN CASE WHERE
CAPTURED IMAGE
IS ACQUIRED

S604
CALCULATE POSITION AND
ORIENTATION OF VEHICLE
REPRESENTED BY
MEASUREMENT POINT
GROUP DATA

S605
CALCULATE POSITION AND
ORIENTATION OF VEHICLE
REPRESENTED
BY CAPTURED IMAGE

S606
DECIDE TARGET POSITION

S607
GENERATE TRAVELING
CONTROL SIGNAL

S608
CONTROL ACTUATOR
BY USING TRAVELING
CONTROL SIGNAL

**END**

**REFERENCES CITED IN THE DESCRIPTION**

**Patent documents cited in the description**

- JP 2017538619 W
- JP 2017538619 A